# EUROPEAN PATENT APPLICATION

(11) **EP 4 240 019 A1**
(43) Date of publication of application: **06.09.2023**
(21) Application number: 20959733.5
(22) Date of filing: 27.10.2020
(51) Int. Cl.: H04N 21/235, H04N 21/234, H04N 21/266

(54) **VIDEO DISTRIBUTION DEVICE, VIDEO DISTRIBUTION SYSTEM, VIDEO DISTRIBUTION METHOD, AND PROGRAM**

(71) Applicant: Amatelus Inc., Tokyo 150-0002 (JP)
(72) Inventor: SENOKUCHI, Izuru, Tokyo 150-0002 (JP)
(74) Representative: AWA Sweden AB
(86) International application number: PCT/JP2020/040259
(87) International publication number: WO 2022/091215

(57) **Abstract**

The present invention provides a technology for setting up and opening hierarchical content public places that define login and other authentications, and distributing a content. The present invention is directed to a video distribution system comprising a video distribution device and a terminal device of a user. The video distribution device has a public place setting unit that sets a public place for distributing content data including at least free viewpoint video data and teaching files on the basis of public place setting information transmitted from the terminal device; and a determination unit that, when a request is received from the terminal device of the user for distribution of the content data in the public place, determines whether the request can be processed based at least on the authorization of the user that has made the request and the authorization set for the public place, and if the conditions are satisfied, the determination unit executes the processing.

## Description

### BACKGROUND OF THE INVENTION

### 1. Field of the Invention

The present invention relates to a technology for utilizing free viewpoint video data, for example, and in particular to a technology for editing free viewpoint video data to generate teaching files for autopilot, and set and open a public place where the teaching files for autopilot are published.

### 2. Description of Related Art

A wide variety of technologies for utilizing free viewpoint video data, for example, have been prevailed. In this situation, various technologies have been proposed for video distribution device that utilizes images captured by multiple cameras. For example, a technology for changing the viewpoint on a subject using the arrangement state of some cameras specified in advance by the user from among multiple cameras with different viewpoints on the same subject as reference is publicly known (see, for example, patent document 1). In this technology, a user-specified camera as well as one or more other cameras that capture images used to generate a series of combined video images are specified as a group, the captured video images of the cameras in this specified group are switched at a predetermined switching time point and combined, and the order of combining the images is determined to generate a series of combined video images.

In contrast, a technology for creating a single video by editing multiple videos simultaneously captured by multiple cameras is known (see, for example, patent document 2). This technology includes: a live-view image acquisition unit, which is connected to a plurality of cameras capable of capturing videos wirelessly or wired, and acquires one or more live-view images from the cameras; a display, which displays the one or more live-view images acquired by the live-view image acquisition unit; an operation unit, which manually switches the live-view images to be displayed on the display; an operation history recorder, which records operation history information indicating an operation history by the operation unit; and a video editing unit, which automatically creates a single video on the basis of the videos captured by the cameras and the operation history information recorded in the operation history recorder after the video capture by the cameras is completed.

Further, patent document 3, for example, discloses a technology related to a usage authorization management device for content sharing systems, which manages the usage authorization of the contents when a sharing unit of a sharing group shares the contents. This usage authorization management device for content sharing systems includes: a registration means for registering usage authorization for content by assigning registration identification information that uniquely identifies the content to the content on the basis of the operational input of a registered user that registers usage authorization for the content; and a management means for managing information on usage by the registered user by associating the registration identification information of the content with the registered user identification information of the registered user.

### [Prior Art Documents]

### [Patent Documents]

[Patent Document 1] Japanese Laid-Open Patent Publication No. 2015-177394
[Patent Document 2] Japanese Registered Patent No. 6302564
[Patent Document 3] Japanese Registered Patent No. 4697468

### SUMMARYOF THE INVENTION

However, patent document 1 discloses a technique for combining videos captured by multiple cameras every time when each of which is captured, and does not disclose a feature in which the videos are edited and teaching files for autopilot are generated.

In the same manner, patent document 2 merely discloses video editing in which a single video is automatically created on the basis of a plurality of videos captured by a plurality of cameras and operation history information, and does not disclose the addition of annotations such as text and audio to the video or the distribution of the edited result as a teaching file for autopilot.

Further, patent document 3 neither discloses nor suggests a hierarchical nested structure of public places where users can set their own authorizations, for example, login is established to allow the distribution of the content.

An object of the present invention is to provide a technology for setting up and opening a hierarchical content public place that defines login and other authorizations, and distributing content.

### [Means to Solve the Problems]

In order to achieve the above object, a video distribution system according to the first aspect of the present invention is directed to a video distribution system including a video distribution device and a terminal device of a user. The video distribution device includes: a public place setting unit that sets a public place where a content data including at least free viewpoint video data and a teaching file is published for distribution on the basis of public place setting information transmitted from the terminal device; and a determination unit that determines, when a request is made from the terminal device of the user for distribution of the content data in the public place, whether a process for the request is performed on the basis of at least authorization of the user that has made the request and the authorization set for the public place, and if a condition is satisfied, the determination unit performs the process. The terminal device includes: a request unit that makes a request for distribution of the content data in the public place of the video distribution device; an acquisition unit that acquires the content data distributed from the video distribution device; and a display that displays video on the basis of the content data.

A video distribution method according to the second aspect of the present invention is directed to a video distribution method performed by a video distribution device and a terminal device of a user. The method includes the steps of: by the video distribution device: setting a public place where a content data including at least free viewpoint video data and a teaching file is published for distribution on the basis of public place setting information transmitted from the terminal device; and determining, when a request is made from the terminal device of the user for distribution of the content data in the public place, whether a process for the request is performed on the basis of at least authorization of the user that has made the request and authorization set for the public place, and if a condition is satisfied, performing the process, and by the terminal device: making a request for distribution of the content data in the public place of the video distribution device; acquiring the content data distributed from the video distribution device; and displaying video on the basis of the content data.

A video distribution device according to the third aspect of the present invention is directed to a video distribution device that can communicate with a terminal device of a user. The video distribution device includes: a public place setting unit that sets a public place where a content data including at least free viewpoint video data and a teaching file is published for distribution on the basis of public place setting information transmitted from the terminal device; and a determination unit that determines, when a request is made from the terminal device of the user for distribution of the content data in the public place, whether a process for the request is performed on the basis of at least authorization of the user that has made the request and authorization set for the public place, and if a condition is satisfied, the determination unit performs the process.

A program according to the fourth aspect of the present invention is directed to a program causing a computer that can communicate with a terminal device of a user to embody: a public place setting unit that sets a public place where a content data including at least free viewpoint video data and a teaching file is published for distribution on the basis of public place setting information transmitted from the terminal device; and a determination unit that determines, when a request is made from the terminal device of the user for distribution of the content data in the public place, whether a process for the request is performed on the basis of at least authorization of the user that has made the request and authorization set for the public place, and if a condition is satisfied, the determination unit performs the process.

### [Advantageous Effects of the Invention]

The present invention provides a technology for setting up and opening hierarchical content public places that define login and other authentications, and distributing a content.

### BRIEF DESCRIPTION OF THE DRAWINGS

Features, advantages, and technical and industrial significance of exemplary embodiments of the disclosure will be described below with reference to the accompanying drawings, in which like numerals denote like elements, and wherein:
FIG. 1 is a diagram illustrating a configuration of a video distribution system according to an embodiment of the present invention,
FIG. 2 is a diagram illustrating a configuration of a video distribution device in the system,
FIG. 3 is a diagram illustrating a configuration of a terminal device in the system,
FIG. 4 illustrates an example of an editing screen,
FIG. 5 illustrates video data and division data,
FIG. 6 illustrates switching of the division data,
FIG. 7 illustrates a configuration of screen teaching data,
FIG. 8 illustrates a configuration of content teaching data,
FIG. 9 illustrates a configuration of annotation teaching data,
FIG. 10 illustrates a configuration of annotation teaching data,
FIG. 11 illustrates an order of generated still image data,
FIG. 12 is a flowchart illustrating the processing steps for editing free viewpoint video data, for example, using the system,
FIG. 13 is a flowchart illustrating the detailed processing steps of the editing process,
FIG. 14 is a flowchart illustrating the processing steps for playback on the basis of the teaching file for autopilot, for example,
FIG. 15(a) is a diagram that defines and describes the type of contents, and FIG. 15(b) is a diagram that defines and describes the type of authorization,
FIG. 16(a) is a diagram showing an example of a user table, FIG. 16(b) is a diagram showing an example of a public place table, FIG. 16(c) is a diagram showing an example of a content table,
FIG. 17 is a flowchart illustrating the processing steps involved in opening a public place, and
FIG. 18 is a flowchart illustrating the processing steps for processing in accordance with authorization.

### DETAILED DESCRIPTION OF EMBODIMENTS

One embodiment of the present invention will be described below with reference to the drawings.

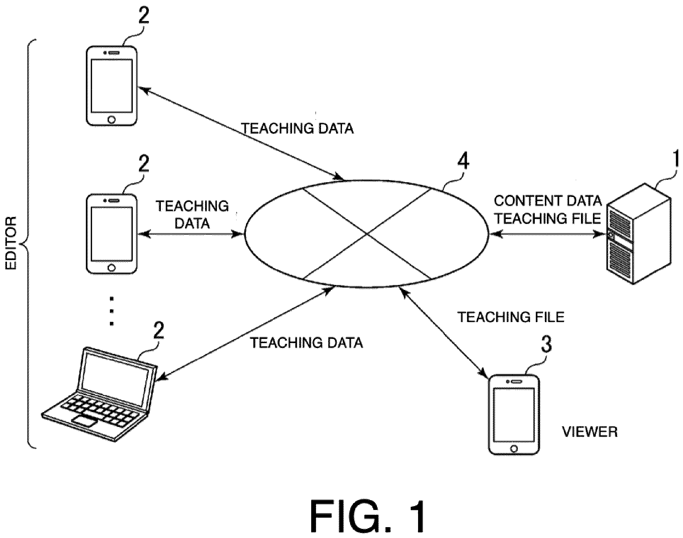

FIG. 1 illustrates a configuration of a video distribution system according to an embodiment of the present invention.

As shown in FIG. 1, the video distribution system includes a video distribution device 1, a terminal device 2 for an editor, and a terminal device 3 for a viewer, which are connected wirelessly or wired to a communication network 4 such as the Internet. The video distribution device 1 may be embodied by one or more server devices or computers, for example. As the terminal device 2 for the editor, various types of terminals may be employed if they are capable of receiving operation input, for example, and displaying information, such as a smartphone, tablet terminal, notebook personal computer, desktop personal computer, and head-mounted display. In the same manner, as the terminal device 3 for the viewer, various types of terminals may be employed if they are capable of receiving operation input, for example, and displaying information, such as a smartphone, tablet terminal, notebook personal computer, desktop personal computer, and head-mounted display.

In this configuration, upon receiving a request from the terminal device 2 for the editor, the video distribution device 1 transmits free viewpoint video data, for example, in which the subject is captured by a plurality of cameras, to the terminal device 2 for the editor. The terminal device 2 for the editor displays a predetermined editing screen, which will be described below, allowing the editor to, while viewing the free viewpoint video data, switch (viewpoint switching) the images, zoom in and out the images, add various annotations (text, graphics, symbols, and audio, for example) to the images, for example, and transmit the teaching data as the result of the editing to the video distribution device 1. In the case where a plurality of editors are present, the teaching data is transmitted from each terminal device 2 for the editor to the video distribution device 1. As the video distribution device 1 receives the teaching data, it generates a teaching file for autopilot on the basis of the teaching data. Further, the video distribution device 1 presents the teaching file for autopilot to the terminal device 3 for the viewer in a distributionable manner. The file may be presented on a dedicated website or on a screen displayed by executing an application program on the terminal device 2.

The term "autopilot" refers to the display of free viewpoint video data by automatically switching viewpoints and shifting playback time positions, for example, on the basis of the contents of the teaching file, without causing the viewer to optionally make operations. The phrase "live autopilot" refers to the sequential generation and distribution of the teaching files for autopilot after an optionally specified predetermined time has elapsed, or immediately as possible, which may be performed independent of the distribution format such as live or on-demand distribution of free viewpoint video data.

As the teaching file for autopilot is selected on a website, for example, provided by the video distribution device 1, and distribution is requested via the terminal device 3 for the viewer, the video distribution device 1 distributes the selected teaching file for autopilot to the terminal device 3 for the viewer. At this time, it may be determined whether the teaching file may be distributed and whether the presence or absence of the teaching file may be displayed depending on the authorization possessed by the viewer. Accordingly, for example, although the presence or absence of the teaching file may be displayed to all users, the distribution of the teaching file may be allowed only to those with purchased authorization, or the teaching file itself may be prevented from being displayed if the user does not have purchased authorization.

When the terminal device 3 for the viewer receives the teaching file for autopilot, it plays back the free viewpoint video on the basis of the teaching file. Conventionally, although the terminal device 3 for the viewer would play back the free viewpoint video while causing the viewer to switch her/his viewpoint to the desired viewpoint, for example, the present embodiment embodies useful playback while automatically switching viewpoints, for example. The contents may be acquired either by online streaming, downloading, or a combination of the two, for example, for the playback of the free viewpoint video.

That is, once the terminal device 3 for the viewer has downloaded the teaching file and free viewpoint video data, it is allowed to freely play back the free viewpoint video even if it is not in a communicationable environment, and to cause the viewer to edit the video and regenerate the teaching file. Further, even if only the free viewpoint video data is downloaded, the viewer is allowed to generate teaching data and teaching file by editing the free viewpoint video data. Moreover, the viewer is also allowed to optionally transmit the teaching file edited, generated, or regenerated by the terminal device 3 to the video distribution device 1, be granted authorization, and cause the file to be distributed.

The video distribution device 1 opens a public place, for example, on a web site where various contents such as free viewpoint video data and teaching files are published in response to requests from terminal devices 2, 3 of the user. When opening a public place, the device receives public place setting information from the terminal device 2 for the editor and the terminal device 3 for the viewer, for example, and opens a public place with a hierarchical nested structure on the basis of the setting information. Hereinafter, users are defined as editors and viewers plus general users. Since various authorizations can be set for users, public places, and contents, for example, to log in to the site, stream contents, and download contents, the video distribution device 1 performs authorization-based processing (e.g., downloading) when it receives various requests for public places. That is, even the general users can open public places, for example, if they have acquired the corresponding authorization.

### Details will be described below.

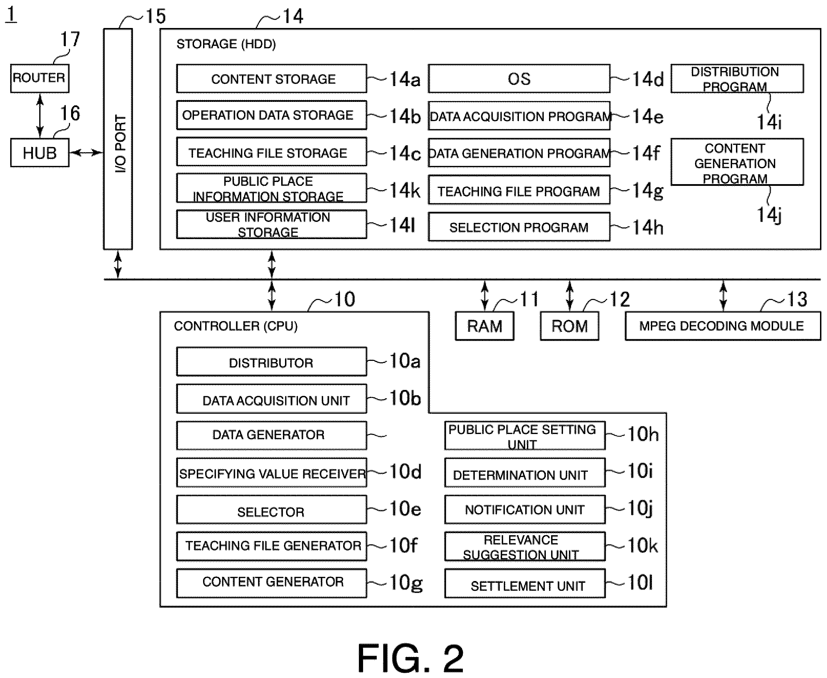

FIG. 2 illustrates the detailed configuration of the video distribution device in the video distribution system.

As shown in FIG. 2, the video distribution device 1, which is configured by a server device, for example, includes a controller 10 for overall control, a random access memory RAM 11 and a read only memory ROM 12 as memory, an MPEG decoding module 13, a storage 14 configured by a hard disk drive HDD, a solid state drive SSD, and flash memory, for example, and an I/O port 15, which are connected to the bus lines. The router 17 is connected through the HUB 16 to the I/O port 15. The controller 10 may be configured by, for example, a central processing unit CPU, a microprocessor, a multiprocessor, an ASIC, and an FPGA, for example.

The storage 14 includes a content storage 14a, an operation data storage 14b, a teaching file storage 14c, a public place information storage 14k, and a user information storage 141. The content storage 14a may store the free viewpoint video data, and still image data divided from the free viewpoint video data, for example. The operation data storage 14b may store operation data transmitted from the terminal device 2 for the editor, for example. The teaching file storage 14c may store the generated teaching file for autopilot. The public place information storage 14k stores the public place setting information, which will be described in detail below. The user information storage 141 stores the attribute information, authorization, browsing history, and other information of the user.

The storage 14 may also store an OS 14d, a data acquisition program 14e, a data generation program 14f, a teaching file generation program 14g, a selection program 14h, a distribution program 14i, and a content generation program 14j. Accordingly, the controller 10 serves as the distributor 10a, public place setting unit 10h, determination unit 10i, notification unit 10j, and relevance suggestion unit 10k by executing the distribution program 14i, serves as the data acquisition unit 10b by executing the data acquisition program 14e, serves as the data generator 10c by executing the data generation program 14f, serves as the specifying value receiver 10d and selector 10e by executing the selection program 14h, and serves as the teaching file generator 10f by executing the teaching file generation program 14g. The controller 10 executes the content generation program 14j to serve as the content generator 10g as well. In addition to this, it serves as a settlement unit 101 under OS 14d.

The acquisition unit 10a acquires multiple video data as free viewpoint video data via the I/O port 15. In the present embodiment, the acquisition unit 10a acquires a plurality of video data in which a subject is imaged from different directions. The content storage 14a stores the acquired free viewpoint video data.

The data generator 10c generates still image data by extracting a frame as a still image for each predetermined time period from the free viewpoint video data acquired by the acquisition unit 10b, i.e., each of the plurality of video data. More specifically, the data generator 10c decompresses the video data stored in the content storage 14a with the MPEG decoding module 13 to a set of still image data, and then stores the set in the content storage 14a. In this case, each still image data is stored in association with the time data indicating the time point at which each still image data is captured.

The specifying value receiver 10d receives a direction specifying value (operation data) from the terminal device 3 for the viewer, which value specifies the position data in the still image data that the viewer wishes to view. The selector 10e selects still image data along the time data on the basis of the direction specifying value received by the specifying value receiver 10d, and transmits it to the terminal device 3 for the viewer via the communication network 4. In this embodiment, the terminal device 3 for the viewer receives the still image data and generates the video.

The teaching file generator 10f generates a teaching file for autopilot on the basis of the teaching data from the terminal device 2 for the editor and stores it in the teaching file storage 14c. The file structure of the teaching file will be described in detail below. The distributor 10a reads the specified teaching file for autopilot from the teaching file storage 14c in accordance with the distribution request from the terminal device 3 for the viewer, and transmits the file to the terminal device 3 for the viewer via the communication network 4. In this transmission, the corresponding content data (including divided still image data) may be transmitted simultaneously, or the corresponding content data may be transmitted each time during the viewing process.

The content generator 10g generates content for free viewpoint video data or streaming video data, for example, on the basis of the free viewpoint video data and teaching file. This content is also transmitted to the terminal device 3 for the viewer by the distributor 10a.

The public place setting unit 10h opens public places with a hierarchical nested structure on the basis of the public place setting information from the terminal devices 2 and 3 to enable the distribution of contents. If a request is received from a user for downloading, and streaming content uploaded to a public place, for example, the determination unit 10i determines whether downloading or other processing is allowed on the basis of the authorization of the user, the authorization of the public place, and the authorization of the content. If free viewpoint video data from other viewpoints has been uploaded for free viewpoint video data, for example, published in a public place, the notification unit 10j notifies the publisher, for example, of that. The relevance suggestion unit 10k suggests relevance if related videos, for example, are present during the playback of the content. The settlement unit 101 then performs electronic settlement related to sales and other transactions for content uploaded to the public place.

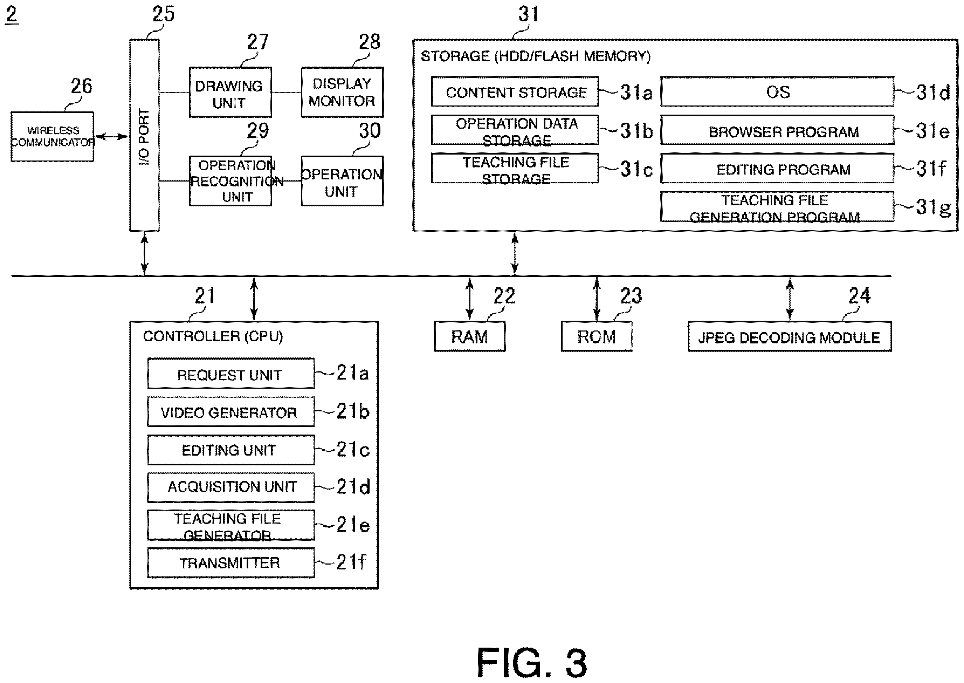

FIG. 3 illustrates the configuration of the terminal device 2 for the editor in the video distribution system. The basic configuration of the terminal device 3 for the viewer is the same as that of the terminal device 2.

As shown in FIG. 3, the terminal device 2 for the editor (as well as the terminal device 3 for the viewer) includes a controller 21, a RAM 22, a ROM 23, a JPEG decoding module 24, an I/O port 25, a wireless communicator 26, a drawing unit 27, a display monitor 28, an operation recognition unit 29, an operation unit 30, a storage 31, imaging unit 32, and GPS unit 33. The units are connected via the bus lines. The controller 10 may be configured by, for example, a CPU, microprocessor, multiprocessor, an ASIC, and/or FPGA, for example. The storage 31 may include an HDD or flash memory.

The storage 31 includes a content storage 31a, an operation data storage 31b, and a teaching file storage 31c. The content storage 31a stores the free viewpoint video data and still image data, for example, transmitted from the video distribution device 1. When the viewpoint or other aspects of the playback video are changed on the basis of the screen operations, the operation data storage 31b stores the operation data. In addition, the teaching file storage 31c stores the teaching files transmitted from the video distribution device 1 and the teaching data generated during editing.

The storage 31 stores an OS 31d, a browser program 31e, an editing program 31f, and a teaching file generation program 31g. Accordingly, the controller 21 serves as a request unit 21a, an acquisition unit 21d, a transmitter 21f, a code analyzer 21g, and a position information acquisition unit 21h on the basis of the OS 31d, serves as a video generator 21b by executing the browser program 31e, and serves as the editing unit 21c by executing the editing program 31f. If the display monitor 28 of the terminal device 3 for the viewer corresponds to a touch panel, the storage 31 stores the touch panel control firmware. The controller 21 serves as the teaching file generator 21e by executing the teaching file generation program 31g.

In editing, the following processes are performed by the units. That is, the request unit 21a makes a request for free viewpoint video data (including divided still image data) to the video distribution device 1. The wireless communicator 26 connected via the I/O port 25 transmits the request. A wired communicator may be provided in place of the wireless communicator 26. The acquisition unit 21d acquires free viewpoint video data (including divided still image data) transmitted from the video distribution device 1. The video generator 21b generates content that may be displayed on the terminal device 3 from the free viewpoint video data. At this time, the drawing unit 27 controls the display on the display monitor 28. The JPEG decoding module 24 decodes the acquired still image data.

The editing unit 21c performs editing processing including changing the viewpoint of the free viewpoint video data (including divided still image data), screen allocating, enlarging/reducing, changing the playback speed, and adding annotations (text, graphics, symbols, and audio, for example) on the basis of the operations by the editor on a screen of which details will be described below, generates teaching data, and stores it in the teaching file storage 31c. When a part of the teaching data corresponds to operation data, the operation recognition unit 29 recognizes the operation of the operation unit 30 and stores it as operation data including the direction specifying value in the operation data storage 31b. The teaching file generator 21e generates a teaching file for autopilot on the basis of the teaching data and stores it in the teaching file storage 31c. The transmitter 21f transmits content data (e.g., streaming video data, for example) in the content storage 31a, teaching data, and teaching files, for example, to the video distribution device 1 via the wireless communicator 26.

In contrast, in the case of playback on the basis of the teaching file for autopilot, the following processes are performed by the units. That is, the request unit 21a requests a teaching file for autopilot to the video distribution device 1. The acquisition unit 21d acquires the teaching file for autopilot transmitted from the video distribution device 1. At this time, the acquisition unit 21a may acquire content data such as 3D point group data, 3D computer graphics, video data or still image data needed for playback. The video generator 21b then generates video on the basis of the teaching file, and the drawing unit 27 plays the video on the display monitor 28. If the teaching file contains annotation data, for example, playback of audio, text, and graphics, for example is performed at the time point defined in the teaching file as well as the playback of the video.

If, in the process of playback on the basis of the teaching file for autopilot, the viewer operates the operation unit 30 and instructs a change of viewpoint, for example, the operation recognition unit 29 recognizes the operation and generates operation data associated with the direction specifying value. The request unit 21a transmits the operation data associated with the direction specifying value to the video distribution device 1 to request a change of viewpoint, for example. When the acquisition unit 21d acquires the free viewpoint video data (including divided still image data) with a changed viewpoint, for example, from the video distribution device 1, playback on the basis of the teaching file is temporarily stopped and playback with a changed viewpoint is executed.

The code analyzer 21g analyzes two-dimensional codes such as QR codes (registered trademark) imaged by the imaging unit 32 to acquire code information. This code information may include, for example, a seat number and position information associated with that seat. The position information acquisition unit 21h acquires the position information on the basis of the communication environment of the wireless communication unit 26 or data acquired from the GPS unit 33. This position information may be associated with the generated content and uploaded to a public place.

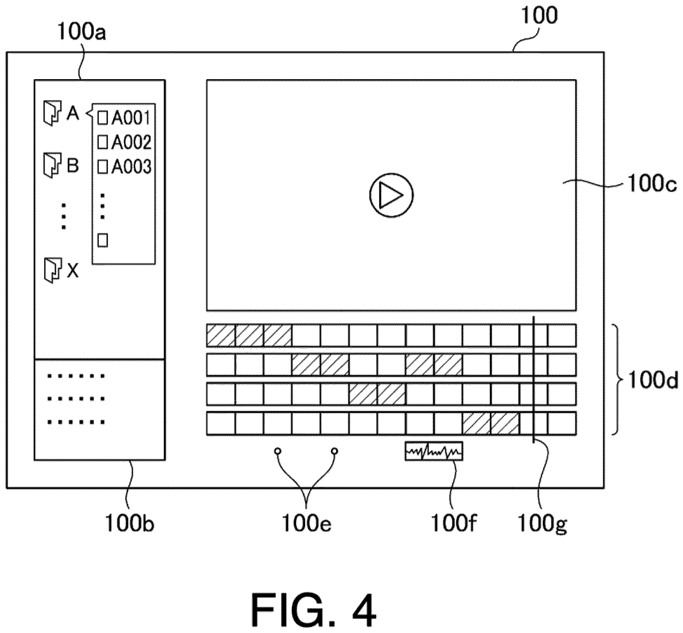

FIG. 4 illustrates an example of an editing screen displayed on the terminal device 2 for the editor.

As shown in FIG. 4, on the region 100a of the editing screen 100, the free viewpoint video data files that may be selected for editing are presented, allowing the editor to select the free viewpoint video data for editing (in this example, divided still image data). The region 100b may be used for writing chats so that when a plurality of editors divides the editorial work, for example, they are allowed to proceed the work while communicating with each other. In addition to the chats, edit logs and other information may be displayed on the region 100b, and unneeded edits may be disabled, or disabled edits may be restored depending on their authorization. Separate display regions and functions for voice calls, and/or video chats, for example, may be provided.

On the region 100c, the playback display is performed on the basis of the selected free viewpoint video data. On the region 100d, the free viewpoint video data selected for editing on the region 100a is divided into predetermined units, and each division unit is indicated with a thumbnail, for example. In this example, the selected division unit is indicated by a dashed line. In the editing process, various annotations may be added to each division unit by operating the operation unit 30. FIG. 4 shows that annotations 100e such as text and graphics are added, and an audio annotation 100f is added. FIG. 4 also shows a current position 100g of the live at a time when editing, as in following the live distribution. In addition to the above, a degree of delay from the current live distribution, and a remaining time to an optional time when the video may be played back after the optional time as a live distribution, for example, may be displayed.

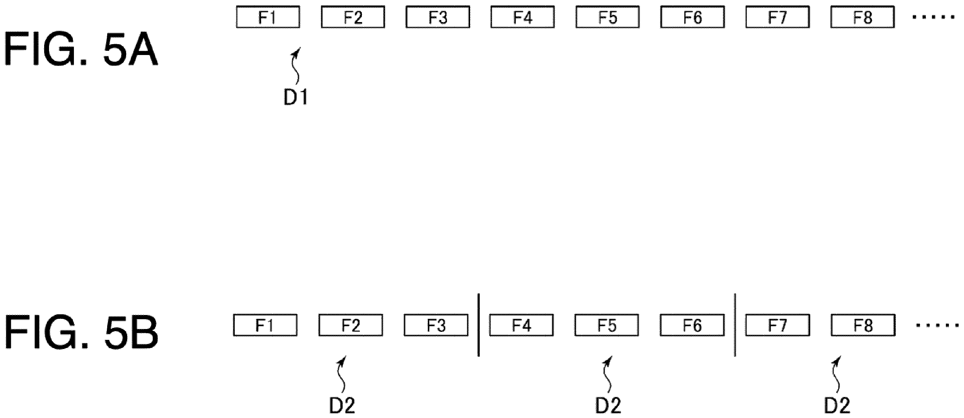

With reference to FIGS. 5A through 5D, the video data and division data conceptually included in the free viewpoint video data will be described in detail.

As shown in FIG. 5A, video data D1 is configured by a plurality of frames F1, F2, F3... The data generator 10c of the video distribution device 1 may divide the video data into a plurality of units of frames and store the video data in units of the division data in the content storage 14a. For example, as shown in FIG. 5B, if the video data is divided into units of three frames, the frames of the video data are sequentially divided into, for example, division data D1 with frames F1 to F3, and division data D2 with frames F4 to F6.

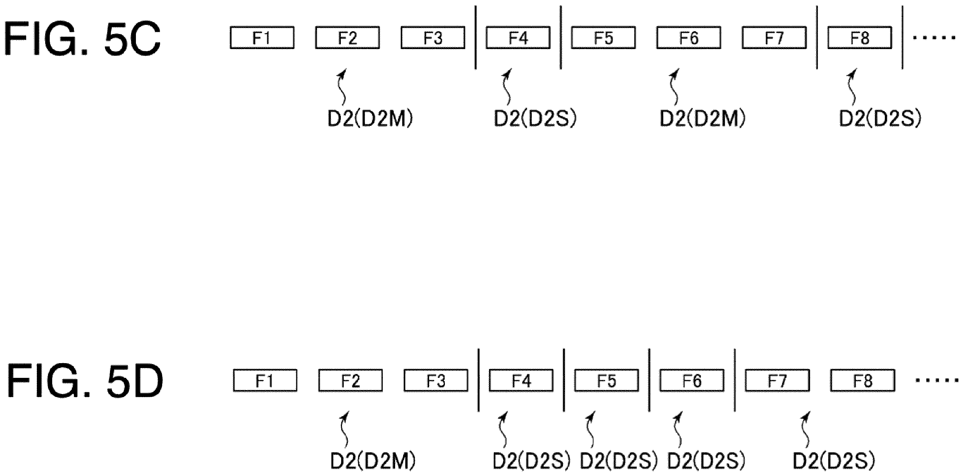

The data generator 10c may also divide the video data into a plurality of frames and one frame, and store them in units of the division data in the content storage 14a. In this case, for example, as shown in FIG. 5C, the division data is configured by a plurality of division data (D2M), which is configured by a plurality of frames, and a single division data (D2S), which is configured by a single frame.

The data generator 10c may also divide the video data such that a single unit of a plurality of division data and a plurality of single division data are arranged alternately in chronological order, and store them in the content storage 14a. In this case, as shown in FIG. 5D, the video data is divided into a single unit of a plurality of division data and a plurality of single division data alternatively in a chronological order, e.g., a single unit (D2M) of a plurality of division data with frames F1 to F3, a plurality of single division data D2S each made by dividing the video data into a frame F4, frame F5...

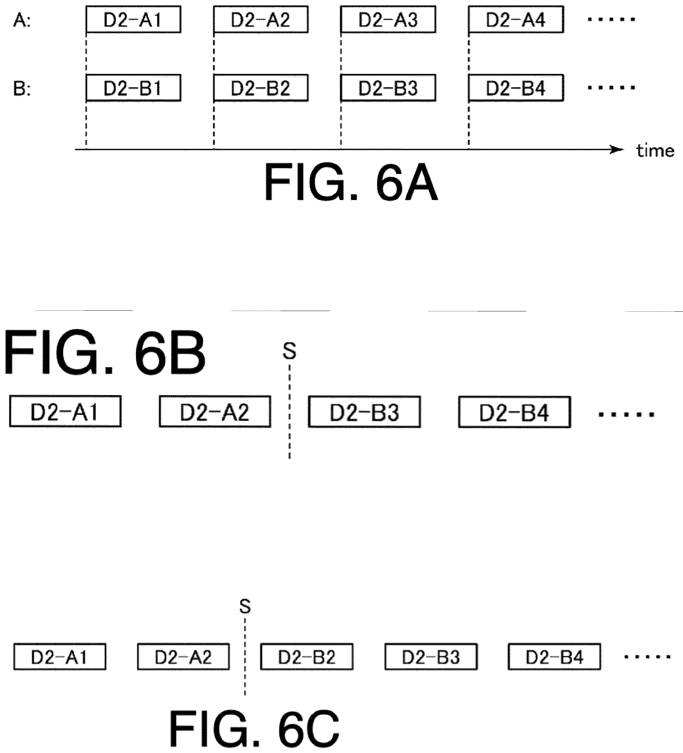

Next, with reference to FIGS. 6A through 6C, switching of division data will be described.

As shown in FIG. 6A, in this embodiment, the division data D2-A1, D2-A2, D2-A3, D2-A4... obtained by dividing the video data A, and the division data D2-B1, D2-B2, D2-B3, D2-B4... obtained by dividing the video data B may be configured by frames obtained by capturing images at the same or nearly the same image capture time. However, depending on the other implementation, the images may be captured at different image capture times.

As shown in FIG. 6B, after the distributor 10a sequentially transmits the division data D2-A1 and D2-A2 on the basis of the video data A, the distributor 10a receives a switching request from the terminal device 3 for the viewer, then the distributor 10a reads the division data D2-B3, which is immediately after the division data D2-A2 in terms of time, from the content storage 14a, and then the distributor 10a reads the division data D2-B4..., which is after the division data D2-B3 in terms of time, from the content storage 14a, and sequentially transmits the read division data.

Further, as shown in FIG. 6C, after the distributor 10a sequentially transmits the division data D2-A1 and D2-A2 on the basis of the video data A, the distributor 10a receives a switching request from the terminal device 3 for the viewer, then the distributor 10a reads the division data D2-B2, which is at the same time point as that of the division data D2-A2 in terms of time, from the content storage 14a, and then the distributor 10a reads the division data D2-B3..., which is after the division data D2-B2 in terms of time, from the content storage 14a, and sequentially transmits the read division data.

The information on the time of the image capture is added to each video data, allowing the distributor 10a to read and distribute the divided data and other divided data consecutively or almost consecutively in time on the basis of the information on the time of the image capture.

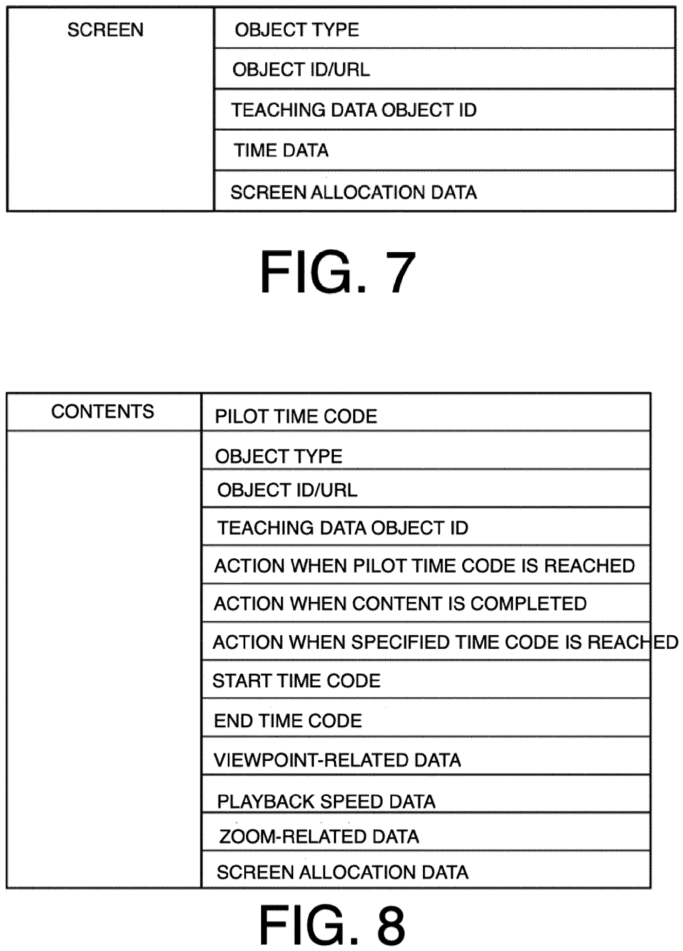

Next, with reference to FIGS. 7 through 10, the structure of the teaching file for autopilot generated by the teaching file generator 10f will be described in detail. The teaching files may include screen teaching data, content teaching data, and annotation teaching data.

FIG. 7 illustrates the structure of the screen teaching data included in the teaching file.

As shown in FIG. 7, the screen teaching data includes object type, object ID/URL, teaching data object ID, time adjustment data, and screen allocation data. The object type corresponds to a screen. The object ID/URL corresponds to the object ID in the teaching data. The time adjustment data corresponds to data to operate with a time code in which the adjustment time is taken into account when the screen allocation data includes the time code. The screen allocation data basically corresponds to the same as the screen allocation data of the content teaching data described below.

FIG. 8 illustrates the structure of the content teaching data included in the teaching file.

As shown in FIG. 8, the content teaching data includes pilot time code, object type, object ID/URL, teaching data object ID, action at a time when pilot time code is reached, action at a time when content is completed, action at a time when specified time code is reached, start time code, end time code, viewpoint-related data, playback speed data, zoom-related data, and screen allocation data.

The pilot time code defines the start time on autopilot. The object type is directed to content. The object ID/URL is directed to an ID/URL that uniquely identifies the content on the system. The teaching data object ID is directed to the object ID in the teaching data. The action at a time when the pilot time code is reached may define an action taken at a time when the time in the pilot time code reaches the start position of the time code of the content or the set start time code. For example, playback, stopping, and video effects are specified. In the action at a time when the specified time code is reached, for each action to be specified, the pilot time code or the time code that the content has is determined as a reference, and the action to be executed at the time when the time code as the reference is reached or passed is specified. Here, "the time when... is passed" illustrates a behavior in which, for example, as the pilot time code jumps from the 8th second to the 15th second immediately by a seek bar, for example, the audio that has been supposed to be played at the time when ten seconds have elapsed on the pilot time code is played from an appropriate audio position if it is within the playback range of the audio. The same behavior at the time of passage is also applicable to the action at the time when the pilot time code is reached, action at a time when content is completed, and action at a time when pilot time code is completed as described below, for example, which are associated with the time code.

The start time code is directed to the start time of playback on the contents, and the end time code is directed to the end time of playback. If the start and end time codes are specified retroactively, the playback is reversed. The viewpoint-related information is directed to information that may be specified depending on the distribution form of the free viewpoint video, and may correspond to a camera ID in the case of the still image transmission form and the video transmission form, a multi-camera ID in the case of the multi-camera form, and a 4x4 view transformation matrix in the case of 3D point group data or 3D computer graphics, for example. Any expression method other than the view transformation matrix may be used if the camera position, camera direction (gazing point), and camera posture may be specified. The playback speed may be defined as 0.125, 0.25, 0.5, 0, 1, 1.25, 1.5, 2, 4, for example, from stop to variable speed playback.

In addition, the screen allocation data is directed to the allocation data for displaying multiple contents on one screen. The screen allocation data allows the user to specify the reference position of the screen, such as top left, top right, bottom left, bottom right, top, and bottom, for example, specify pixel measure, and set the ratio of the display region with respect to the entire screen, for example. The display region is not limited to a rectangle, but shapes such as regular circles, Pezier curves, spline curves, multiple straight lines, and polylines may also be specified. Another content may be layered on the top of one content and displayed, as in wipes. Further, one or more time codes and the corresponding display region forms at that time may also be specified. Moreover, specification that morphing is performed also allows a smooth change of form in shifting to a new display region form to be specified, and time for the change of the form may be optionally specified as well. The time code may be specified as the time when the display time of the corresponding screen object is reached, such as 0 seconds, and the time code may be specified using the autopilot time code as the reference as well.

Although the basic structure of the content teaching data is described above, the structure may also be the minimum structure when the content is expressed, which is configured by only pilot time code, teaching data object ID, and viewpoint-related data. The structure may also be the minimum structure configured by only the pilot time code, teaching data object ID, start time code, end time code, and viewpoint-related data, with the viewpoint-related data containing one or more time codes and the corresponding viewpoint-related information at that point in time.

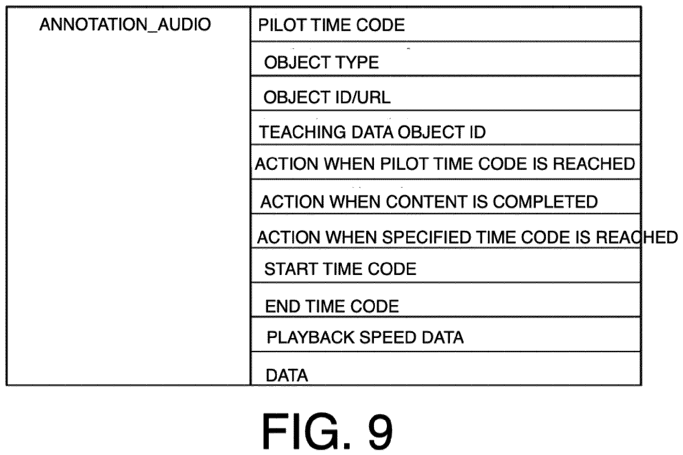

FIG. 9 illustrates the structure of the annotation teaching data (audio) included in the teaching file. As shown in FIG. 9, the annotation teaching data (audio) includes pilot time code, object type, object ID/URL, teaching data object ID, action at a time when pilot time code is reached, action at a time when content is completed, action at a time when specified time code is reached, start time code, end time code, playback speed, and data.

The pilot time code is directed to the start time on autopilot. The object type is directed to content. The object ID/URL is directed to an ID/URL that uniquely identifies the position of the data on the system. The teaching data object ID is directed to the object ID on the teaching data. Actions at a time when the pilot time code is reached may specify playback, stop, and video effects, for example. As an action at a time when the content is completed, the action to be taken at a time when the time code to terminate the playback of the content is reached may be specified. In the action at a time when the specified time code is reached, for each action to be specified, the pilot time code or the time code that the content has is determined as a reference, and the action to be executed at the time when the time code as the reference is reached or passed is specified. The start time code is directed to the start time of playback on the audio, and the end time code is directed to the end time of playback on the audio. The playback speed may be defined as 0.125, 0.25, 0.5, 0, 1, 1.25, 1.5, 2, 4, for example, from the playback stop to variable speed playback. As for the data, the audio data itself may be embedded rather than referenced. The playback speeds specified in the teaching data may be specified without affecting each other. For example, the playback speed of audio may be specified without interfering with the playback speed specified for the content. For example, the content is at 2x speed and the audio at 1x speed.

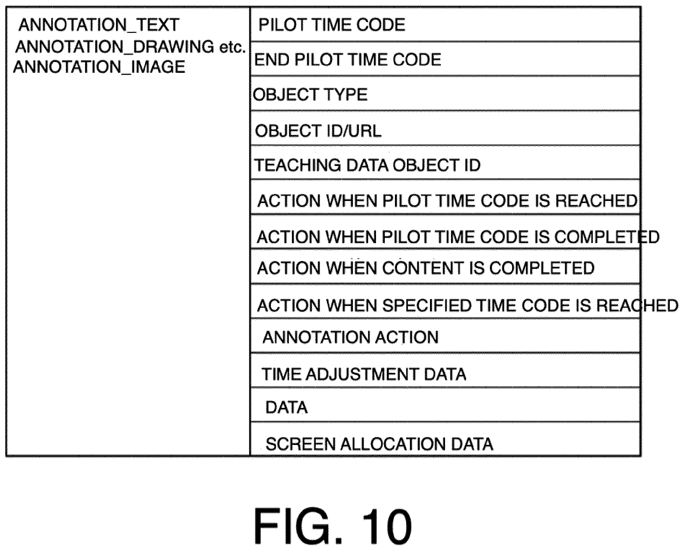

FIG. 10 illustrates the structure of annotation teaching data (text, drawing, and image, for example) included in the teaching file.

As shown in FIG. 10, the annotation teaching data (text, drawing, and image, for example) includes pilot time code, end pilot time code, object type, object ID/URL, teaching data object ID, action at a time when pilot time code is reached, action at a time when pilot time code is completed, action at a time when content is completed, action at a time when specified time code is reached, annotation action, time adjustment data, data, and screen allocation data.

The pilot time code is directed to the start time on autopilot. The end pilot time code is directed to the end time on autopilot. The object type is directed to content. The object ID/URL is directed to an ID/URL that uniquely identifies the position of the data on the system. The teaching data object ID is directed to the object ID on the teaching data. Actions at a time when the pilot time code is reached may specify playback, stop, and video effects, for example. Actions at a time when the pilot time code is completed may specify video effects, audio playback, and video wipe display playback, for example. In the action at a time when the specified time code is reached, for each action to be specified, the pilot time code or the time code that the content has is determined as a reference, and the action to be executed at the time when the time code as the reference is reached or passed is specified. Annotation actions may specify actions to be taken when the display region is clicked, tapped, or when a predetermined audio is input via the microphone, for example. These actions include, for example, optional audio output, turning back the time of the pilot time code, stopping playback of content for a predetermined period of time and outputting audio during that time, video effects, and video playback, for example. The above described actions may be specified in the same manner as in the actions at a time when pilot time code is reached, action at a time when pilot time code is completed, action at a time when content is completed, and action at a time when specified time code is reached, for example, as appropriate.

The time adjustment data is directed to data to operate with a time code that takes the adjustment time into account. The data may specify the strings, graphics, and images, for example, to be displayed, as well as the display position, and display style, for example. For the screen allocation data, if it is not set, the data is overlaid on the entire display screen in a layer above the content.

When the teaching data generated on the basis of the operations on the editing screen shown in FIG. 4 above is transmitted from the terminal device 2 for the editor, the video distribution device 1 receives it, and the teaching file generator 10f generates teaching files including these screen teaching data, content teaching data, and annotation teaching data on the basis of the received teaching data and stores the teaching files in the teaching file storage 14c.

The generated teaching files for autopilot are published on a website operated by the video distribution device 1, for example, and provided as appropriate, allowing the terminal device 3 for the viewer to receive the teaching file that the viewer wishes to view from among the teaching files. In the terminal device 3 for the viewer, the received teaching file is stored in the teaching file storage 31c, and on the basis of the teaching file, the video generator 21b generates contents that may be displayed on the terminal device 3, and plays and displays them on the display monitor 28.

At this time, since the teaching file for autopilot specifies the viewpoint of the contents (e.g., divided still image data), playback speed, presence or absence of zooming, and screen allocation, for example, playback is performed in accordance with the specified conditions. In addition, since the teaching file for autopilot also includes annotation teaching data for audio and text, for example, allowing the text and audio, for example, to be played back at the specified time point in synchronization with the playback in accordance with the annotation teaching data. Accordingly, the viewer acquires a teaching file for autopilot that matches her or his preferences and objectives, allowing her or him to automatically have the opportunity to view a content that is suitable for her or him without needing to change the viewpoint, for example, herself or himself.

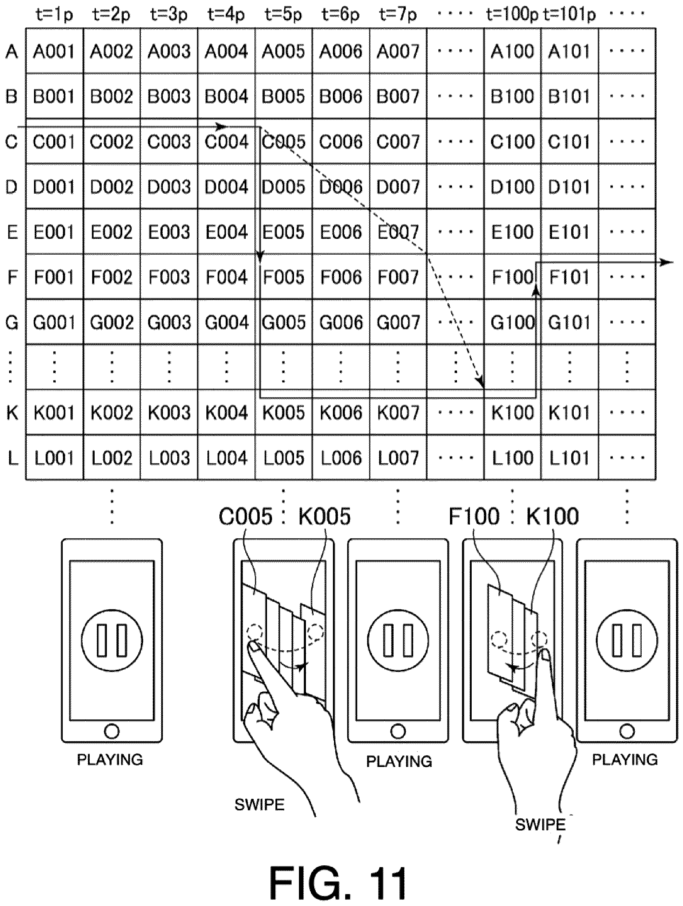

If a user operation is performed during the playback on the basis of the teaching file for autopilot on the terminal device 3 for the viewer, autopilot playback is temporarily suspended, and the screen is switched and playback is performed on the basis of the user operation. With reference to FIG. 11, this point will be described in detail below. During the autopilot playback, change of the playback speed in the autopilot time code, rewind, and move to any autopilot time code, for example, may be available without interrupting the autopilot, except for switching the viewpoint, for example. The user operation described above also includes pressing a button or other UI for suspending autopilot.

FIG. 11 shows a table with an identification number as direction data on the vertical axis and time data on the horizontal axis in which file names of still image data corresponding to the vertical and horizontal axes are shown. The still image data to be displayed will transition in response to user operations as illustrated below in FIG. 11. This means that the still image data corresponding to the cell through which the solid arrow in FIG. 11 passes is displayed on the terminal device 3 for the viewer.

First, in a state where the still image data of C001 is played back in accordance with the teaching file for autopilot, the video is played back sequentially in chronological order. When, during the execution of automatic playback, the specifying value receiver 10d receives a direction specifying value by a swipe operation by the viewer, the automatic playback on the basis of the teaching file for autopilot is temporarily suspended, and the selector 10e selects corresponding still image data (C005 to K005) using the time data (t=5p) of the still image data corresponding to a time when the direction specifying value is received as a reference on the basis of the amount of change of the direction specifying value during the swipe operation.

That is, the selector 10e uses the time when the direction specifying value is received (t=5p) as reference, and first selects the still image data (C005) corresponding to the position data (direction data) selected at the moment. In the process of changing the direction specifying value, the selector 10e selects still image data corresponding to the same time data, one frame at a time, in the order of identification number. When the still image data (K005) in which the direction specifying value is specified by the swipe operation is displayed, the image is once temporarily stopped. When the user then presses the playback start button again, the still image data corresponding to the direction specifying value at that time is continuously played back. Alternatively, the still image data corresponding to the direction specified value at that time may be continuously played back without being once temporarily stopped.

When the user performs the swipe operation again (t=100p), as described above, the selector 10e selects the still image data corresponding to the same time data, one frame at a time, in the order of the identification number (K100 to F100). After the still image data (F100) specified by the swipe operation is then displayed, the still image data corresponding to the same direction specifying value will continue to be played back if it is not once temporarily stopped. In the above description, the selector 10e selects the same time data as that of the still image data using the time data (t=5p) of the still image data corresponding to the time when the direction specifying value is received as reference. However, the embodiments are not limited to this.

That is, as shown by the dashed arrows, in the video distribution device according to the present invention, the selector 10e may use the time data (t=5p) of the still image data corresponding to the time when the direction specifying value is received as reference, and select the time data next to the already selected time data sequentially. In this case, the video will not be stopped during the swipe, but will remain played.

Further, when the specifying value receiver 10d does not receive a direction specifying value, and when the amount of change in the direction specifying value per unit time is less than the threshold value, the selector 10e selects the still image data such that the direction data are continuously connected. In contrast, the selector 10e selects the image data such that the direction data is intermittently connected when the amount of change in the direction specifying value per unit time is greater than or equal to the threshold value. Here, "intermittently" is directed to a fact that only a part of the data is acquired for the direction data that are successively lined up.

That is, when the operation recognition unit 29 determines that the amount of operation by the swiping operation is large due to the user 40 moving her or his finger large or fast, the still image data corresponding to the direction data that is away from the original direction data may be acquired without acquiring the still image data corresponding to the adjacent direction data. The terminal device 3 then displays still image data of the subject at the direction specifying value that changes on the basis of the direction specifying operation during the direction specifying operation using the still image data received from the selector 10e. In contrast, when the direction specifying operation is not performed, the terminal device 3 sequentially receives and displays, in chronological order, the still image data of the direction specifying value corresponding to the completion position of the direction specifying operation to display a pseudo-video from the direction corresponding to the completion position.

When returning from the above playback during which the viewpoint direction is switched on the basis of the operation of the viewer to the automatic playback on the basis of the teaching file for autopilot, the viewer may tap a predetermined button displayed on the playback screen of the terminal device 3 for the viewer, for example, to give a command to resume automatic playback on the basis of the teaching file for autopilot from the time point of interruption, or time point of switching.

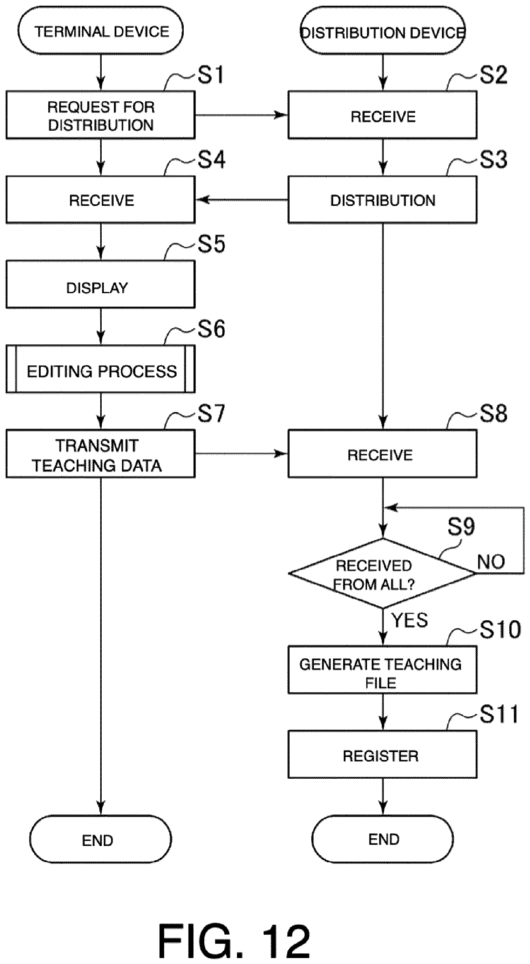

With reference to the flowchart in FIG. 12, the processing steps associated with the generation of a teaching file for autopilot by the video distribution system according to the embodiment of the present invention will be described.

This process assumes that in the terminal device 2 for the viewer, the controller 21 executes the editing program 31f and the display monitor 28 displays the editing screen 100 as shown in FIG. 4. However, the display form is not limited to that shown in FIG. 4.

When the selectable free viewpoint video data shown in the region 100a is selected on the editing screen 100, the request unit 21a makes a request to the video distribution device 1 for distribution of the free viewpoint video data (step S1). In the video distribution device 1, the acquisition unit 10b receives a distribution request (step S2), and the distributor 10a reads the free viewpoint video data associated with the distribution request from the content storage 14a, and distributes it to the terminal device 2 for the viewer (step S3).

In the terminal device 2 for the viewer, this free viewpoint video data is received (step S4), and the video generator 21b generates content that may be displayed on the terminal device 2, and displays the content on the region 100c and region 100d in the editing screen 100 displayed on the display monitor 28 (step S5). On the region 100d, the divided still image data are displayed, allowing the viewer to recognize the division units as well as the thumbnails and other information. On the region 100c, the video selected for editing is played back.

In the terminal device 2 for the viewer, the editing unit 21c then executes the editing process (step S6). The details of the editing process will be described in detail later. For example, selection of divided still image data (viewpoint information), playback speed, and addition of various annotations, for example, will be performed. When the editing process is completed, the editing unit 21c stores teaching data conceptually including screen teaching data, content teaching data, and annotation teaching data, for example, in the teaching file storage 31c, and also transmits the data to the video distribution device 1 (step S7).

In the video distribution device 1, the acquisition unit 10b receives this teaching data and stores it in the teaching file storage 14c (step S8). If the teaching data is then received from all the terminal devices 2 for the editors (step S9: Yes), the teaching file generator 10f generates the teaching file on the basis of the stored teaching data (step S10), and stores it in the above file storage 14c (step S11). As described above, a series of processes associated with the generation of the teaching file for autopilot are completed. The teaching files for autopilot stored in the teaching file storage 14c are published on a predetermined website, for example, for viewers in a selectable manner.

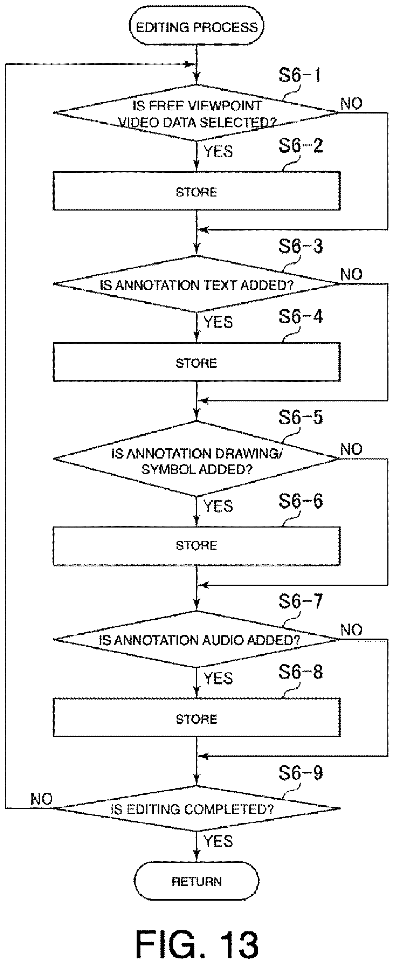

With reference to the flowchart in FIG. 13, the processing steps of the editing process performed in step S6 in FIG. 12 will be described in further detail.

Entering the editing process, the editing unit 21c determines whether content is selected (step S6-1). If content is selected (step S6-1: Yes), content teaching data is stored in the teaching file storage 31c (step S6-2). If a content is not selected (step S6-1: No), the process proceeds to step S6-3.

The content teaching data stored in the teaching file storage 31c in step S6-2 includes pilot time code, object type, object ID/URL, teaching data object ID, action at a time when pilot time code is reached, action at a time when content is completed, action at a time when specified time code is reached, start time code, end time code, viewpoint-related information, playback speed, zoom-related information, and screen allocation information. These details are as described above.

The editing unit 21c then determines whether annotations (text) are added (step S6-3). If the annotations (text) are added (step S6-3: Yes), the annotation teaching data (text) is stored in the teaching file storage 31c (step S6-4). If annotations (text) are not added (step S6-3: No), the process proceeds to step S6-5.

The annotation teaching data (text) stored in the teaching file storage 31c in step S6-4 includes pilot time code, end pilot time code, object type, object ID/URL, teaching data object ID, action at a time when pilot time code is reached, action at a time when pilot time code is completed, action at a time when specified time code is reached, annotation action, time adjustment, data, and screen allocation information. These details are as described above.

The editing unit 21c then determines whether annotations (drawing and symbol, for example) are added (step S6-5). If the annotations (drawing and symbol, for example) are added (step S6-5: Yes), the annotation teaching data (drawing and symbol, for example) is stored in the teaching file storage 31c (step S6-6). If annotations (drawing and symbol, for example) are not added (step S6-5: No), the process proceeds to step S6-7.

The annotation teaching data (drawing and symbol, for example) stored in the teaching file storage 31c in step S6-6 includes pilot time code, end pilot time code, object type, object ID/URL, teaching data object ID, action at a time when pilot time code is reached, action at a time when pilot time code is completed, action at a time when specified time code is reached, annotation action, time adjustment, data, and screen allocation information. These details are as described above.

The editing unit 21c then determines whether annotation (audio) is added (step S6-7). If the annotation (audio) is added (step S6-7: Yes), the annotation teaching data (audio) is stored in the teaching file storage 31c (step S6-8). If annotation (audio) is not added (step S6-7: No), the process proceeds to step S6-9.

The annotation teaching data (audio) stored in the teaching file storage 31c in step S6-8 includes pilot time code, object type, object ID/URL, teaching data object ID, action at a time when pilot time code is reached, action at a time when content is completed, action at a time when specified time code is reached, start time code, end time code, playback speed, and data. These details are as described above.

As described above, the editing unit 21c determines whether all editing is completed (step S6-9). If all editing is not completed (step S6-9: No), the process returns to step S6-1 and repeats the above process. If all editing is completed (step S6-9: Yes), the editing process is completed and the process returns to step S8 or later in FIG. 12.

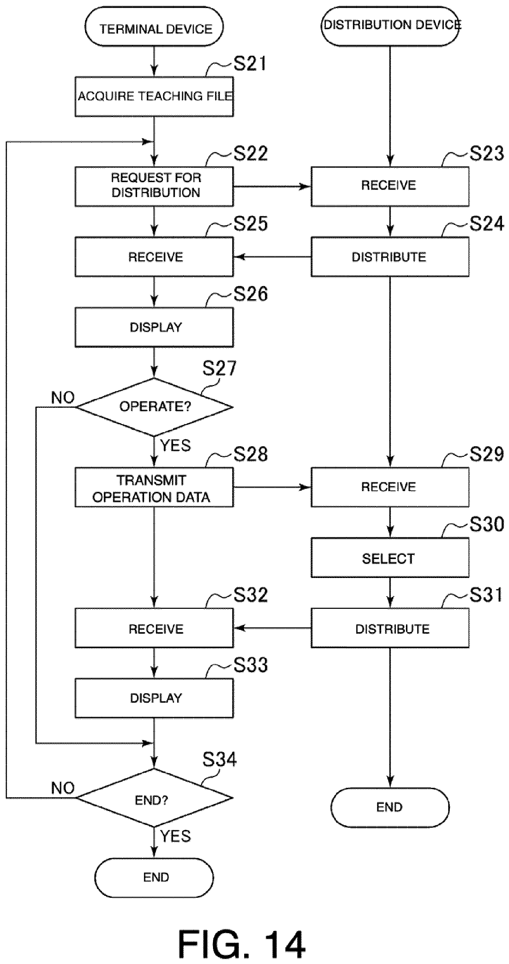

Next, with reference to the flowchart in FIG. 14, the process of distributing teaching files for autopilot by the video distribution system according to the embodiment of the present invention will be described.

First of all, as a premise, the video distribution device 1 presents a plurality of selectable teaching files for autopilot on a website. In the terminal device 3 for the viewer, the acquisition unit 21d acquires the teaching file and executes playback on the basis of the teaching file (step S21). With the start of playback associated with this autopilot, the request unit 21a makes a request to the video distribution device 1 to distribute the free viewpoint video data (including divided still image data, for example) taught by the content teaching data (step S22).

The video distribution device 1 receives a distribution request (step S23), and the distributor 10a reads and distributes the corresponding free viewpoint video data from the content storage 14a (step S24). In the terminal device 3 for the viewer, the free viewpoint video data is received (step S25), and the video generator 21b generates content that may be displayed on the terminal device 3 on the basis of the free viewpoint video data, and plays and displays it on the display monitor 28 (step S26). In the process of playback associated with this autopilot, it is determined whether any user operation (e.g., screen swipe operation), for example, is performed (step S27). If the screen swipe operation is not performed (step S27: No), the playback display on the basis of the teaching file for autopilot is continued until the playback is completed (step S34).

In contrast, if the user operation is performed in the process of playback associated with the autopilot (step S27: Yes), the controller 21 transmits the operation data (including the direction specifying value) to the video distribution device (step S28). The video distribution device 1 receives the operation data and stores it in the operation data storage 14b (step S29). The selector 10e then selects the free viewpoint video data (still image data) in which the direction specifying value is specified by the user operation using the time when the direction specifying value is received as reference (step S30), and the distributor 10a distributes the selected free viewpoint video data (still image data) to the terminal device 3 for the viewer (step S31).

In the terminal device 3 for the viewer, the acquisition unit 21d receives this selected free viewpoint video data (still image data) (step S32), and the video generator 21b generates content that may be displayed on the terminal device 3 and switches the display on the display monitor 28 (step S33). The controller 21 then determines whether the playback is to be completed (step S34). If the playback is not to be completed, the process returns to the above step S22 and repeats the process above. If the playback is to be completed, the process terminates the series of processes.

This completion of playback includes the completion of automatic playback on the basis of the teaching file for autopilot, and the completion of playback when the autopilot is temporarily suspended on the basis of the user operation and playback on the basis of the user operation is performed.

Next, the public place will be described in further detail.

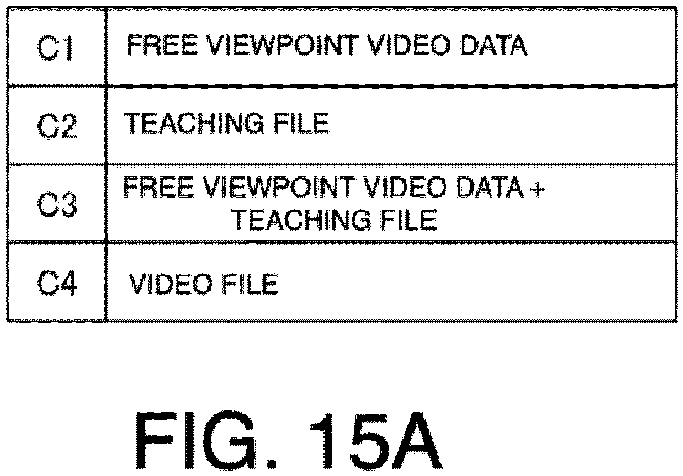

The data that the video distribution device 1 publishes in public places set optionally and hierarchically by the user is classified, for example, as shown in FIG. 15(a). That is, the data corresponds to video files, for example, generated by first, the free viewpoint video data, second, the teaching files, third, the free viewpoint video data and teaching files, and fourth, the free viewpoint video data and teaching files. Hereinafter, the teaching files and the video files generated on the basis of the teaching files, for example, will be referred to as the autopilot files.

As described above, the terminal devices 2 of the other users can stream and download, for example, the data published in the public place on the basis of their own authoritzations. At this time, the distribution device 1 determines whether to allow downloading, for example, on the basis of the authorization granted to the data that can be published and the authorizations of the other users that are viewing, for example.

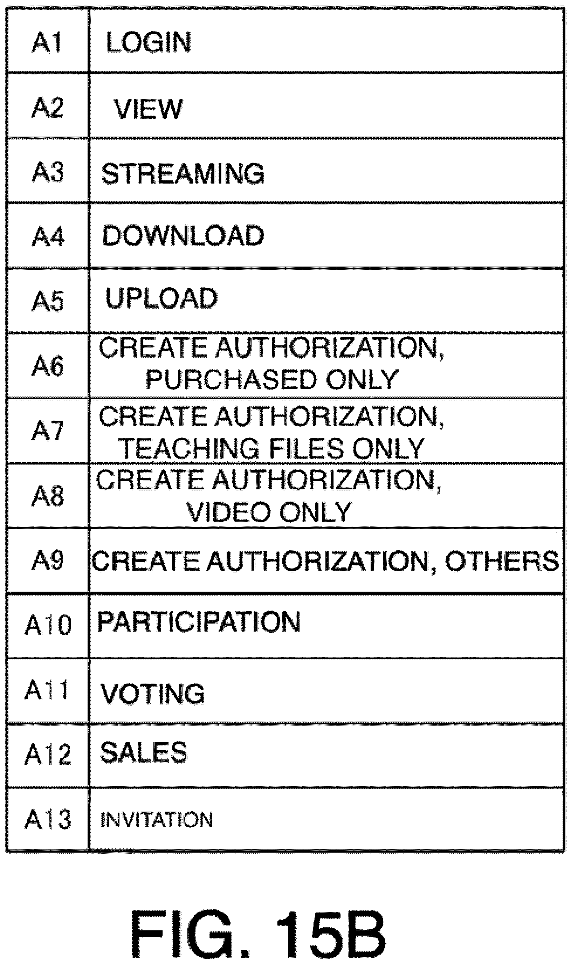

Here, the data that can be published and the authentications granted to other users to view, for example, are classified, for example, as shown in FIG. 15(b). The authorizations are classified as follows: login (A1), view (A2), streaming (A3), download (A4), upload (A5), create (purchased only) (A6), create (teaching files only) (A7), create (videos only) (A8), create (others; for example, autopilot files) (A9), participation (A10), voting (A11), sales (A12), and invitation (A13), for example. The determination unit 10i of the distribution device 1 determines whether a request is acceptable on the basis of these authorizations (A1 to A13), and if the request satisfies the authorizations, it will proceed with processing in response to the request, such as downloading or streaming.

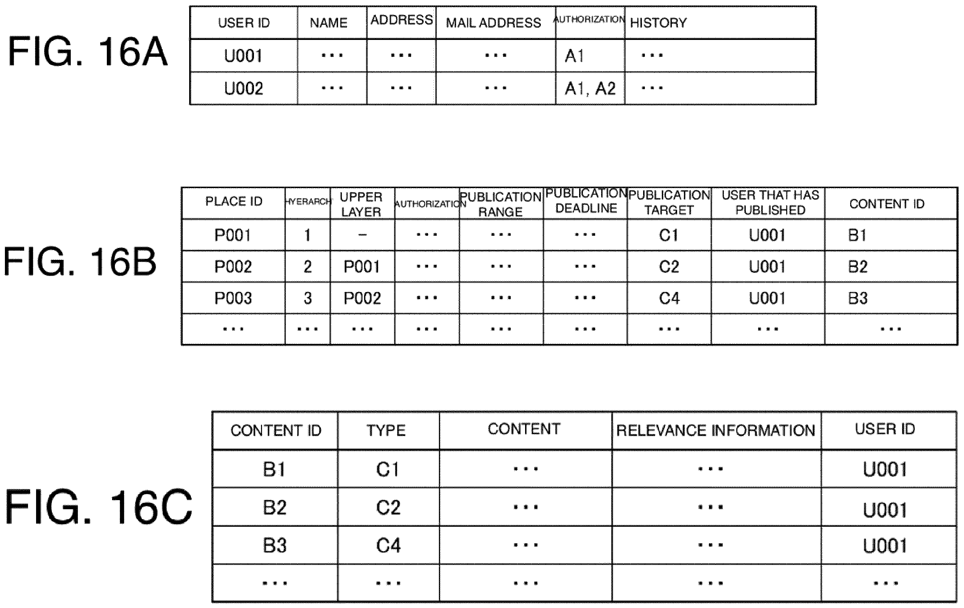

The user information storage 141 of the storage 14 of the video distribution device 1 stores therein a user table. An example of this user table is as shown in FIG. 16(a), for example, where attribute information such as name, address, and mail address, as well as the authorization granted to the user (A1 to A13) and history information such as downloads and purchases are associated with the user ID and stored.

The public place information storage 14k of the storage 14 of the video distribution device 1 stores therein a public place table. An example of the public place table is as shown, for example, in FIG. 16(b). The public place table associates and stores the hierarchy of the corresponding public place, a relationship with the upper layer, the authorization granted to the corresponding public place or content, the publication range, the publication deadline, the publication target, the user that has published the content, and the content ID with the place ID.

In the content storage 14a of the storage 14 of the video distribution device 1, the contents that correspond to the public place are also stored in the content table. An example of this content table is as shown in FIG. 16(c). This content table associates and stores therein the content type (C1-C4), content data, relevance information, and the user ID of the user that has created the content with the content ID. The relevance information is directed to information that suggests the presence of related free viewpoint video data and autopilot files for an optional time code during the playback of the free viewpoint video data, for example. In the video distribution device 1, the relevance suggestion unit 10k refers to the relevance information during the playback of the free viewpoint video data, for example, and executes suggestions at the associated time point.

In the video distribution device 1, the public place setting unit 10h sets the public place table and opens a public place on the basis of the public place setting information transmitted from the terminal device 2, for example. As mentioned above, the public place also includes the hierarchy and the relationship between it and the upper layers so that the public place to be described can be of a multilevel nested structure.

For example, the following nested structures can be constructed:
- 1. Public Places (Organizer; Company Name, for example)
   - 2. Public Places (Event Category)
      - 3. Public Places (Events)
         - 4. Public Places (for Upload)

That is, in the top layer, public places can be published by the name of the organizer, in the middle layer, public places can be published by categories of events handled by the organizer, and in the lower layer, public places can be published by events belonging to each category, and in addition, public places for uploading contents by viewing users, for example, can be published. For each public place, authorizations (A1 to A13) can be granted as shown in FIG. 16(b) above.

This allows promoting one' s own brand, and products, for example, using the services related to the public places. In that case, more specifically, the public places can have the following nested structure, for example:
1. Music Company Public Places
   - 2. Public Places per Artist
      - 3. Music Video and Live Video Purchasers Public Places
         - 4. Free Viewpoint Video Data Public Places
            - 5. Autopilot File Group Public Places

A user with streaming or download authorization (e.g., A1, A2) or, a user that enters a PIN code, for example, given to a purchased item is allowed to log in to a target music video and live video public place and view the target free viewpoint video data, for example, in that public place.

The authorizations may be set for each public place as follows. That is, user login (ID and password) shall be required for the music company public place. The contents in the public place for each artist can be viewed by anyone that can log in to the music company public place. A music video and live video purchaser is allowed to log in to the public place by entering a PIN code, for example, and view the target free viewpoint video data. However, this is an example and examples are not limited to this.

Users with creation authorizations (such as A6, A7, A8, and A9) can create autopilot files and upload them to the public place. In this case, the user with sales authorization (A12) may offer a price and receive payment by the settlement unit 101, or may receive alternative points or other benefits. Official autopilot files may be sold, for example, by music companies as content holders. In this case, the range of customers that can purchase official teaching and video files can be expanded to include music company public places, or narrowed down to only music videos and live video public places, and the range of customers that can purchase the teaching and video files can be changed after a specified number of days have elapsed, and the price can be changed, for example. These changes are made by updating the public place table by the public place setting unit 10h.

The nested structure also allows, for example, only the autopilot file group to be published without publishing the free viewpoint video data, as shown below.
1. Music Company Public Places
   - 2. Public Places per Artist
      - 3. Music Video and Live Video Purchasers Public Places
         - 4. Autopilot File Group Public Places

In this case, the transition to the free viewpoint video data may be disabled for the autopilot files as an authorization.

The nested structure of the public place described above can also be subdivided to the individual level. For example, when a customer is provided with a video imaged at an amusement park, a public place where only that customer is allowed to log in may be provided. If the customer has purchased authorization, she/he may be allowed to view free viewpoint video data, for example, and to create autopilot files in accordance with the authorization.

Here, the publication of publishable data uploaded to a public place can be regulated by authorization, publication range, publication deadline, and publication target, for example. If the range of publication is limited to only the contributor or a group of contributors, the range of publication can be restricted to those persons by regulating that in the range of publication. In this case, if a plurality of users image the original free viewpoint video data and upload it to a public place, these users belong to a unit referred to as a group. In addition to this, if access restrictions are applied on the basis of the authorization, it is sufficient to regulate on the basis of the authorization. In addition, the public range may be set to allow SNS to be a public destination.

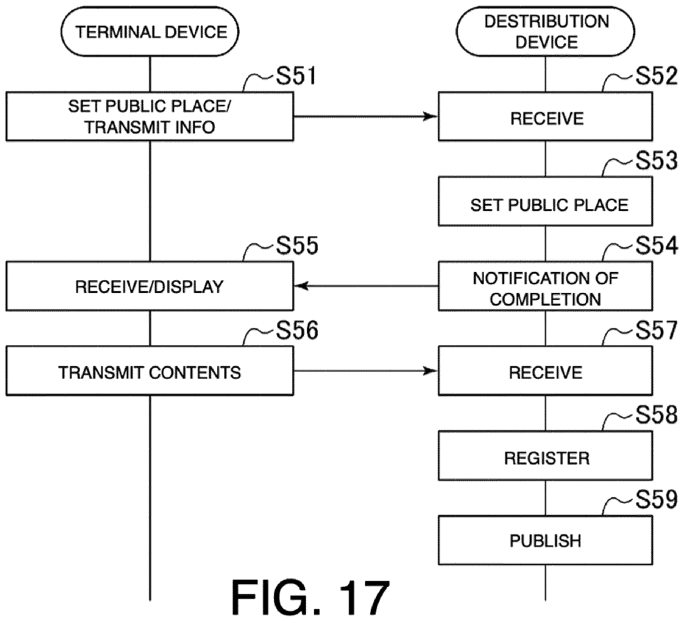

Referring to the flowchart in FIG. 17, the flow of the process up to the opening of a public place by the video distribution system according to an embodiment of the present invention will be described below.

The terminal device 2 accepts input of public place setting information through the operation of the operation unit 30, for example, by accessing a website provided by the distribution device 1, and the transmitter 21f transmits the public place setting information to the distribution device 1 (step S51). Here, the public place setting information may include information of, for example, hierarchy of the corresponding public place, the upper layer if it is present, authorization, publication range, publication deadline, and publication target. In the distribution device 1, if the acquisition unit 10b acquires the public place setting information (step S52), the public place setting unit 10h sets these public place setting information in the public place information storage 14k (step S53). At this time, a place ID is assigned and associated with the user ID of the public user.

In the distribution device 1, the notification unit 10j transmits a setup completion notification to the terminal device 2 (step S54). In the terminal device 2, if the acquisition unit 21d receives this setup completion notification, it is displayed on the display monitor 28 (step S55). The transmitter 21f transmits the contents (C1 to C4) to be uploaded to the set public place (step S56). In the distribution device 1, if the acquisition unit 10b receives the transmitted contents (step S57), it associates and registers them with the place ID of the public place in the content storage 14a, and updates the contents of the public place table in the public place information storage 14k (step S58). As described above, the public place setting unit 10h starts publishing the public place (step S59).

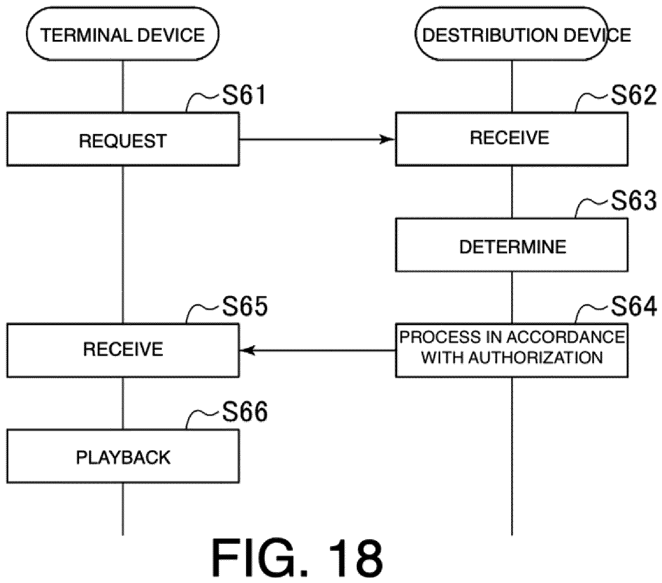

Next, referring to the flowchart in FIG. 18, the flow of processing in accordance with the authorizations will be described in detail by the video distribution system according to one embodiment of the present invention.

If the terminal device 2 of the user receives the user's selection of a public place that the user wishes to view by operating the operation unit 30, for example, by accessing a website related to a public place provided by the distribution device 1, for example, the request unit 21a transmits the user ID and the place ID of the selected public place to the distribution device 1 to request for viewing, for example (step S61).

If the acquisition unit 10b receives this request (step S62), the distribution device 1 determines whether the request is acceptable (step S63). Specifically, the determination unit 10i determines the acceptability of the request by referring to the user table in the user information storage 141, identifying the user based on the user ID, checking the authorizations granted to the user, referring to the public place table in the public place information storage 14k, identifying the public place based on the place ID, checking the authorizations set for the public place, and comparing these authorizations.

If the determination unit 10i determines that the user has the authorization to request a process such as viewing a public place, it performs the process in accordance with the authorization (step S64). Specifically, if the request is for downloading or streaming, those processes are performed. If the terminal device 2 receives the content (step S65), it starts playback, for example (step S66).

Next, an example of the video distribution system as described above will be described.
(1) The distribution device 1 may open a public place that accepts uploads of video, 3D CG data, 3D point cloud data, for example, (hereinafter referred to as "original data" ) imaged by users, and may prompt them to generate free viewpoint video data or autopilot files on the basis of these original data. For example, data obtained by a plurality of users imaging a soccer game at a stadium or other location is uploaded to prompt the users to generate free viewpoint video data or autopilot files on the basis of those original data. Such a public place may be held by the event organizer as a public place for an imaging event, or it may be a public place for an event created optionally by the users. The determination of whether to update the public place of the original data is made by the determination unit 10i on the basis of the authorization.

As for the imaging of the original data, only imaging in accordance with the navigation of the official application distributed by the distribution device 1 may be allowed, or imaging with an ordinary camera or ToF, for example, may be allowed. As a part of the public place information, the target of publication is specified, allowing defining acceptable original data. The original data can also be associated with the position information. For example, the position information can be obtained from a ticket and seat when the original data is obtained by imaging with the official application described above.

For example, a QR code or other two-dimensional code on the ticket can be read to identify the position where the image is captured, and whether the image can be captured can be determined only after going to the seat. In addition to this, imaging can be regulated on the basis of the position information such as connection status to designated Wi-Fi, Bluetooth (registered trademark) reception at the venue, for example, the user is allowed to image if she/he is within the assumed range of GPS. Further, the position identification can be performed by communication between terminals (Bluetooth (registered trademark), and UWB, for example), position information of Wi-Fi, wide-area position information of GPS, and feature point matching between the imaged objects (ToF, and photogrammetric method, for example), and directional information, pitch angle, roll angle, yaw angle, and sea level information can also be acquired and transmitted if available. In this case, these information are associated with the original data and managed.

As for the time during the imaging, the generation time of the file itself, a time stamp included in the original data, or time information obtained from GPS, for example, included in the imaged data may be used. For files for which this information cannot be obtained or is unreliable, the time at which the image has been captured may be determined on the basis of consistence between the time point and the location identification information (especially, communication information between terminals at that time, and feature points consistence, for example).

(2) When publishing free viewpoint video data to the public place, the distribution device 1 may determine the qualification authorization (purchased, teaching file only, video only, and both of them, for example, can be granted) that allows the generation of an autopilot file for the data, and also, regarding the generation of the autopilot file, an upper limit time (e.g., 60 seconds) and/or a lower limit time (e.g., 10 seconds or more) for the generation of the autopilot file may be set.

Even if the upper time limit for generating the autopilot file is not set for the free viewpoint video data, the user may be able to set the upper time limit for generating the autopilot files individually. In this case, the upper time limit information is associated with the corresponding data. For example, the total generation time limit of autopilot files that can be generated in a month (e.g., 600 seconds), and the generation time limit for one autopilot file (e.g., 30 seconds) are considered. The time limit may be extended for any of the generation time limits by paying some kind of compensation or by obtaining a certain evaluation for generated autopilots by other users and raising their ranks. For example, the total generation time limit in a period could be extended to 1200 seconds, or the generation time limit could be extended to 120 seconds are imagined.

(3) When a plurality of viewpoints are present in the free viewpoint video data, the distribution device 1 may be able to selectively acquire free viewpoint video data for each viewpoint. In this case, for example, services such as purchasing the data for each viewpoint or a 5-viewpoint pack which is less expensive than purchasing five individual viewpoints may be provided. When all the viewpoints have been purchased (completed), a privilege viewpoint or a privilege autopilot file may be given for a fee or free of charge, or, for example, the right to create an autopilot file for the corresponding free viewpoint video data may be given for a fee or free of charge. This allows purchasing only the viewpoints that are needed and consequently less expensive, or causing motivation to complete all the viewpoints.

In the case where the user has downloaded free viewpoint video data for a purchased viewpoint, she/he may free up disk space by deleting any viewpoint from her/his disk if she/he no longer need it after the purchase. In addition, if the user has already purchased it, she/he may download data for the same viewpoint again after the deletion, depending on her/his authorization. Further, a limit on the number of times for downloading or a downloadable deadline may be set. The viewpoints that the user feels not needed for viewing may be set to be failed to be loaded in the case of streaming in place of downloading. This allows the user to view only the viewpoints that are most suitable for her or him, or to reduce the communication amount when streaming.

(4) In the distribution device 1, the notification unit 10j notifies the user side (notification availability and notification reception conditions may be determined by the user side) when the user has acquired free viewpoint video data and autopilot file, and/or when a new viewpoint or autopilot file is later added to the free viewpoint video data or autopilot file. The notification method may include web push, application notification, attention at the time of viewing the corresponding data, notification to the e-mail of the user, or any other method. In the distribution device 1, the notification unit 10j may notify the user side (notification availability and notification reception conditions may be configurable by the user side) when the user has made settings such as being concerned even if the user has not acquired the free viewpoint video data and autopilot file.

In addition, in the distribution device 1, the relevance suggestion unit 10k suggests that related free viewpoint video data and autopilot files are present for any time code when normal free viewpoint video data is viewed. For example, in the case of sports, the relevance suggestion unit 10k notifies (suggests) autopilot files of fine plays, for example, or for educational purposes, when a hairdresser has difficulty understanding the explanation of a cut in a certain time code, the relevance suggestion unit 10k notifies (suggests) that a normal video has been associated and uploaded with it. At this time, the relevance suggestion unit 10k may also notify (suggest) at any time point when the user is viewing the corresponding data independent of the time code.

In the distribution device 1, the relevance suggestion unit 10k causes a compatible player to suggest that related free viewpoint video data and autopilot files are present for any time code when the autopilot files are viewed. For example, in the case of sports, an "auto-pilot file" for fine plays, for example, may be suggested. At this time, the relevance suggestion unit 10k may also notify (suggest) at any time point when the user is viewing the corresponding data independent of the time code.

(5) Physical devices (e.g., DVDs) or digitally acquired (e.g., purchased) music videos, for example, may be given the privilege of accessing free viewpoint video data and autopilot files. The user may also be able to create an autopilot file on her/his own side and share it on the public place depending on her/his authorization. The content holders can determine whether they can set up a paid setting by establishing qualifications, for example. Points may be awarded for high ratings, which may be used like money in public places. The content holders may also publish autopilot files (or set a limit on the number of files they can publish depending on the contract plan they have with the corporation). The amount of money may be set by one month viewing as subscription. In addition to this, any user-generated autopilot files that are excellent or have a higher rating than the content holder-generated ones, they can be associated with a system that allows for job requests and recruitment.

(6) The distribution device 1 can also set swipe time on the basis of the instructions on the publisher side. When a video, for example, enters this swipe time, it may automatically stop at an optional time code (the audio may be stopped or the audio during the swipe time may be separately selected) where the viewpoint may automatically turn (allowing not only the movement of the viewpoint but also the advancement of the time code at any speed), the video may automatically start playback when it completes turning at any time, or direct the playback by itself. As for the swipe time, a viewer log may be recorded and the swipe may be skipped the second time, for example, or the skipping may be optionally selected on the basis of the setting by the publisher.

(7) The video distribution system according to the present invention can also be used for auditions and contests. For example, idol auditions may be held on the official app for C, and participation may be open to users that satisfy the entry qualifications and imaging conditions. These auditions and contests can be held as tie-ups with companies, and general users can also hold auditions and contests if they are authorized by setting public access ranges and granting viewing privileges to them, for example. Usage of the general users may include, for example, usage at school festivals.

For example, the imaging conditions may be specified as, for example, five smartphones with the official application for C installed, following the guide of the official application for C to image. Specifically, the conditions may be specified such that the five smartphones must be within the expected range in terms of GPS location information, and the devices must be in two-way communication via Bluetooth (registered trademark), and UWB, for example, to ensure that they are within the expected range. In the same manner, the camera cannot start imaging if conditions are not satisfied such that the size of the subject is guided in relation to the imaging range (e.g., please move back a little more so that the entire subject can be included). One terminal is used as the parent to start imaging, and children thereof (in this case, the other four terminals) behave synchronously upon receiving commands to start, pause, and completely stop imaging. A countdown may be uttered and displayed before the start and stop of imaging. The terminal participating in the imaging may be the parent, or a non-participating terminal may be the parent. Further, the first terminal to initiate the imaging may serve as the parent, or only a defined terminal can serve as the parent. The children terminals are also capable of both or any of pausing and fully stopping of the imaging. If the entry qualification is fifteen years old or older, and eighteen years old or younger, for example, a flow may be set up for checking the entry qualification. For example, one may transmit a photo of her or his face in a student ID card, or an image of herself or himself with her or his face. As for the entry qualifications, sometimes a determination is made immediately, and sometimes only what is needed for the entry qualification is transmitted, and entry qualification is determined later after the image is captured.

For auditions and contests, the organizer is capable of making various settings for the distribution device 1. For example, free viewpoint video data and videos of the dance to be danced first are released a week in advance, and the participants are requested to dance the dance, or they are given a script in advance and requested to speak a set line with gestures in response to the line that is played from their smartphones. In the situation where although the audition is known (e.g., the role of "a certain person" in a movie titled "a certain title"), no prior information on the audition contents are available, restrictions may be set such that after the start of participation, the contents of the audition are announced through the smartphone, participants are allowed to use various methods such as singing or dancing to music, and improvising to the lines streaming through the smartphone, and scripts and other information are displayed after the start of participation, and the participants need to complete imaging for submission within one hour. Further, the organizer may set up a system such that the range of publishing the submitted free viewpoint video data may be set, for example, in which the participants that have submitted the free viewpoint video data can win on the basis of the evaluation by the users that view the data. Moreover, the organizer may also set up a system such that the user takes the initiative up to the third round, and the organizer can determine the final selection, for example. Furthermore, the organizer can also set up a system such as a tournament style with groupings, and revival of losers, for example.

(8) The video distribution system according to the present invention is capable of utilizing the free viewpoint video data through tie-up projects. For example, a method of usage may be considered such that when one purchases a soft drink, she/he can upload the original data by imaging the QR code attached to the product in accordance with the guide of the official application, and tie-up companies create and use free viewpoint video data from the selected original data in campaign videos, and advertisements, for example. The time point of imaging the original data may be directed to either a pattern in which the application takes the initiative to image at a certain date and time (e.g., 30 seconds from 23:59:45 on December 31 to 0:0:15 at the beginning of the new year, which is the corresponding date and time in each country) or a pattern with a deadline such as uploading the original data for a certain number of seconds by a certain date and time. The environment in which the original data is imaged can be specified (e.g., video of a person drinking a soft drink), and detailed specifications can be made such that the label is ensured to be included in the original data.

In the filtering process, inappropriate materials such as obscene materials can be excluded by machine learning, and the accuracy of the original data that is considered appropriate can be automatically labeled as a percentage and selected as a filter to perform filtering by gender, age, background music, and position information, for example. The key point is considered to be in the way of conducting appropriate screening and presenting it to the companies. The result data created from the original data may be other than the free viewpoint video data. For example, videos of thousands of people may be merged and tiled. For a tie-up with Kobe-city, messages and predetermined songs may be accepted during the same time period when the earthquake (e.g., one minute) occurred, and the location may be around street pianos in Kobe-city.

(9) In addition, the spots where free viewpoint video data is imaged in various positions are displayed on the map, and the spots where the data has imaged can be recognized. If the authorization to publish the data is turned on, other people participating may know that the user has captured the image at that location. If the authorization to publish the data or the authorization to publish the autopilot files are turned on, other people are also allowed to view the free viewpoint video data.

As described above, the video distribution system, for example, according to the embodiment of the present invention, achieves the following advantages.

According to the video distribution system, for example, of the embodiment of the present invention, the video distribution system is capable of generating a teaching file for autopilot, allowing the terminal device for the viewer to perform automatic playback on the basis of the teaching file for autopilot if the viewer acquires the teaching file. At this time, since the teaching file includes various annotation teaching data such as audio, text, images, and drawings, additional effect is automatically reproduced along with the playback. Accordingly, the viewer simply acquires and executes the teaching file that meets her or his needs without needing to switch viewpoints, for example, by herself or himself, allowing the viewer to enjoy playback with the desired switching of viewpoints, for example,

Such an autopilot responds to the needs of viewers that feel cumbersome to view the video while changing their own viewpoints, that do not know which point in time is useful, or that are desirous of viewing in a time-saving manner all at once. As an example of use, live video, for example, may first be published as free viewpoint video data (including divided still image data), and then teaching files generated on the basis of teaching data edited by the editor may be published later. For example, when free viewpoint video data related to live performances is handled, teaching files that enable playback following only specific artists may be generated.

Further, although the basic concept is to generate various teaching data in the terminal device 2 for the editor as described above and generate teaching files for autopilot in the video distribution device 1, user operations (e.g., swipe operation) in the terminal device 2 for the editor or the terminal device 3 for the viewer may be recorded and used as a part of the teaching data.

If a user operation (e.g., a swipe operation) is performed during the process of automatic playback on the basis of a teaching file for autopilot, freedom may be achieved such that the automatic playback may be temporarily suspended and the viewpoint may be switched on the basis of the user operation, for example.

In addition to this, teaching files for autopilot may be re-edited by forking (branching and copying), merging (joining), cloning (copying), for example, allowing the published teaching files to be shared by multiple people and thus to be expected to develop into those diverse.

Here, the embodiments of the present invention also include the followings.

The teaching files for autopilot may be generated on the basis of free viewpoint video data in live broadcast (live stream). For example, a teaching file for autopilot automatically generated by machine learning may be distributed live (live distribution), or it may be manually created (collaborative editing work may also be performed), and as live, after an optional time (e.g., five minutes delay), the viewer may playback the content from the start of the live with a delay of the optional time. The teaching files for autopilot created by complex machine learning may also be viewed and edited by the editor for live distribution (live distribution). Further, if human work cannot be completed in time, normal free viewpoint video data may be distributed for a certain period of time, and the teaching file for autopilot may be distributed live again (live distribution) at a stage when it is created. In the joint editing of teaching files for autopilot, the autopilot may be created immediately by using already established joint editing techniques, exclusion control in the own timeline, or edit merging using the operational transformation (OT) method, for example. Moreover, even for on-demand free viewpoint video data, teaching files for autopilot may be automatically generated by machine learning, editors are allowed to view and edit the teaching files for autopilot generated by machine learning, and collaborative editing work on teaching files for autopilot may also be available. In addition, one or more autopilot and live autopilot information may be simultaneously assigned and distributed to one free viewpoint video content.

In the above flow, a "video file" may be generated up to the point where the work is completed during the creation of the teaching file for autopilot, which may then be distributed as a regular video file. In this case, the video file may be published on a dedicated website, for example, and may be viewed by streaming or downloaded depending on the authorization. Furthermore, information on the free viewpoint video content included in the component in each time code for the video file may be embedded in the video as metadata (e.g., in XMP format, for example) or associated with the video as a separate file and made available (the location of the file may be described in XMP, for example, or, in the case of the HLS format, the location and contents of the file may be described in an m3u8 file, for example, or an inquiry to the specified server or other method may be used to obtain the contents and location of the file). The metadata is referred to, allowing the corresponding video player to transition from the video file to the free viewpoint video content currently being viewed during playback, for example, and change the viewpoint to any viewpoint, as well as return to the point at which the video file is transitioned and resume playback. Further, at a time when autopilot and live autopilot of the free viewpoint video are performed, or when a video file generated from the content of the teaching file for autopilot and live autopilot is viewed, the user is optionally capable of transitioning to a content of the free viewpoint video as an original source to view the free viewpoint video, and returning to a point of the transition to resume the autopilot and live autopilot (both the free viewpoint video and video file).

In addition, how each individual views free viewpoint video and approximate attributes may be learned, and the transmitted free viewpoint video may be automatically switched on the basis of the learning results. The content owner may also manually create the file (collaborative work is also possible, and the collaborative editing function may be granted to general users on the basis of their authorization), and then distribute the teaching file for live autopilot after a predetermined time has elapsed.

Also, on the basis of the viewing statistics of preceding users that have viewed the free viewpoint video, teaching files for live autopilot may be generated and distributed from, for example, the most frequently viewed viewpoints. Video streaming data, for example, in HLS format, may be sequentially generated from the teaching file for live autopilot and distributed live (live distribution). In addition, information on the free viewpoint video content included in the component in each time code for the video streaming data may be embedded in the video as metadata (e.g., in XMP format, for example) or associated with the video as a separate file and made available (the location of the file may be described in XMP, for example, or, in the case of the HLS format, the location and contents of the file may be described in an m3u8 file, for example, or an inquiry to the specified server or other method may be used to obtain the contents and location of the file). The metadata is referred to, allowing the corresponding video player to transition from the video file to the free viewpoint video content currently being viewed during playback, for example, and change the viewpoint to any viewpoint, as well as return to the point at which the video file is transitioned and resume playback.

In addition, if the target or genre preferred by the user is retained as attribute information, a teaching file for autopilot that embodies content playback with a viewpoint and magnification, for example, suitable for that user may be generated on the basis of such attribute information and provided to that user. For example, if "ball" is selected for sports, a teaching file for autopilot may be generated and distributed such that the ball is always tracked by object recognition.

Although the embodiments of the present invention are described above, the invention is not limited thereto, and various further improvements and modifications are possible without departing from the spirit of the present invention.

### [Description of the Reference Numerals]

1...video distribution device, 2...terminal device, 3...terminal device, 4...communication network, 10... controller, 10a...distributor, 10b... acquisition unit, 10c...data generator, 10d ... specifying value receiver, 10e...selector, 10f...teaching file generator, 11...RAM, 12...ROM, 13...MPEG decoding module, 14...storage, 14a...content storage, 14b...operation data storage, 14c...teaching file storage, 14d...OS, 14e...data acquisition program, 14f...data generation program, 14g...teaching file generation program, 14h...selection program, 14i...distribution program, 14j...content generation program, 14k...public place information storage, 14l...user information storage, 15...I/O port, 16...hub, 17...router, 21...controller, 21a...request unit, 21b...video generator, 21c...editing unit, 21d...acquisition unit, 22...RAM, 23...ROM, 24...JPEG code module, 25...I/O port, 26...wireless communicator, 27...drawing unit, 28 ...display monitor, 29...operation recognition unit, 30...operation unit, 31...storage, 31a...content storage, 31b...operation data storage, 31c...teaching file storage, 31d...OS, 31e...browser program, 31f...editing program.

## Claims

1. A video distribution system comprising a video distribution device and a terminal device of a user, wherein
the video distribution device includes:
a public place setting unit that sets a public place where a content data including at least free viewpoint video data and a teaching file is published for distribution on the basis of public place setting information transmitted from the terminal device; and
a determination unit that determines, when a request is made from the terminal device of the user for distribution of the content data in the public place, whether a process for the request is performed on the basis of at least authorization of the user that has made the request and the authorization set for the public place, and if a condition is satisfied, the determination unit performs the process, and
the terminal device includes:
a request unit that makes a request for distribution of the content data in the public place of the video distribution device;
an acquisition unit that acquires the content data distributed from the video distribution device; and
a display that displays video on the basis of the content data.

2. The video distribution system according to claim 1, wherein the authorization includes at least one of the following: login, streaming, downloading, uploading, creating content data, participating in a event, voting, and selling content data.

3. The video distribution system according to claim 1 or 2, wherein the public place has a hierarchical structure, and the public place setting information includes information on hierarchy of the public place and information on the authorization.

4. The video distribution system according to claim 1, wherein
the teaching file contains teaching data, and
the teaching data includes at least one of the following: screen teaching data, which teaches a screen form, content teaching data, which teaches a content, and annotation teaching data, which teaches addition of at least one of text, graphic, symbol, and audio.

5. The video distribution system according to claim 1, wherein, if a user operation is performed during playback on the basis of the teaching file for autopilot on the terminal device, the playback for the autopilot is temporarily suspended, and a screen is switched and the playback is performed on the basis of the user operation.

6. The video distribution system according to any one of claims 1 to 5, wherein at a time, on the terminal device, when autopilot and live autopilot of the free viewpoint video are performed, or when a video file generated from a content of a teaching file for autopilot and live autopilot is viewed, the video distribution device optionally prompts the user on the terminal device to transition to a content of the free viewpoint video as an original source to view the free viewpoint video, and return to a point of the transition to resume the autopilot and live autopilot.

7. A video distribution method performed by a video distribution device and a terminal device of a user, the method comprising the steps of:
by the video distribution device:
setting a public place where a content data including at least free viewpoint video data and a teaching file is published for distribution on the basis of public place setting information transmitted from the terminal device; and
determining, when a request is made from the terminal device of the user for distribution of the content data in the public place, whether a process for the request is performed on the basis of at least authorization of the user that has made the request and authorization set for the public place, and if a condition is satisfied, performing the process, and
by the terminal device:
making a request for distribution of the content data in the public place of the video distribution device;
acquiring the content data distributed from the video distribution device; and
displaying video on the basis of the content data.

8. A video distribution device that can communicate with a terminal device of a user, the video distribution device comprising:
a public place setting unit that sets a public place where a content data including at least free viewpoint video data and a teaching file is published for distribution on the basis of public place setting information transmitted from the terminal device; and
a determination unit that determines, when a request is made from the terminal device of the user for distribution of the content data in the public place, whether a process for the request is performed on the basis of at least authorization of the user that has made the request and authorization set for the public place, and if a condition is satisfied, the determination unit performs the process.

9. A program causing a computer that can communicate with a terminal device of a user to embody:
a public place setting unit that sets a public place where a content data including at least free viewpoint video data and a teaching file is published for distribution on the basis of public place setting information transmitted from the terminal device; and
a determination unit that determines, when a request is made from the terminal device of the user for distribution of the content data in the public place, whether a process for the request is performed on the basis of at least authorization of the user that has made the request and authorization set for the public place, and if a condition is satisfied, the determination unit performs the process.
